(19) **Europäisches Patentamt**
European Patent Office
Office européen des brevets

(11) **EP 2 368 207 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
*G06F 21/00* (2006.01)   *G07C 9/00* (2006.01)
*H04L 9/00* (2006.01)

(21) Anmeldenummer: **10787704.5**

(22) Anmeldetag: **30.11.2010**

(86) Internationale Anmeldenummer:
**PCT/EP2010/007439**

(87) Internationale Veröffentlichungsnummer:
**WO 2011/063992 (03.06.2011 Gazette 2011/22)**

(54) **AUTHENTISIERTE ÜBERTRAGUNG VON DATEN**

AUTHENTICATED TRANSMISSION OF DATA

TRANSFERT AUTHENTIFIÉ DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2009 DE 102009055947**

(43) Veröffentlichungstag der Anmeldung:
**28.09.2011 Patentblatt 2011/39**

(73) Patentinhaber:
• **Busch, Christoph**
**2815 Gjovik (NO)**
• **Hartung, Daniel**
**2815 Gjovik (NO)**

(72) Erfinder:
• **Busch, Christoph**
**2815 Gjovik (NO)**
• **Hartung, Daniel**
**2815 Gjovik (NO)**

(74) Vertreter: **Patentanwälte Bressel und Partner**
**Potsdamer Platz 10**
**10785 Berlin (DE)**

(56) Entgegenhaltungen:
**WO-A1-02/078249    WO-A2-02/05077**
**WO-A2-2004/019188    US-A- 4 993 068**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren, ein Computerprogramm, eine Anordnung und ein System zur Übertragung von Daten, die von zumindest einer Person bestätigt sind. Die Erfindung betrifft insbesondere das Gebiet der durch die Person authentisierten Übertragung von Daten.

Insbesondere bei kostenrelevanten Transaktionen wie im Online-Banking oder im Zusammenhang mit Online-Auktionen sind folgende relevanten Informationen zu übertragen:

a) Welches Empfänger-Konto erhält eine Gutschrift (Receiver-Account-Number) bzw. für welches Kaufobjekt wird geboten?
b) Welcher Betrag soll dem Empfänger gutgeschrieben bzw. geboten werden (Ordered Amount)?
c) Welches Sender-Konto erhält eine Belastung (Sender-Account-Number, kann bei Auktion entfallen)?
d) Welche natürliche Person hat die Transaktion initiiert und die Transaktionsdaten bestätigt?

In vielen derzeitig eingesetzten Datenübertragungs-Protokollen sind die Informationen a), b) und c) nur ungenügend geschützt. In keinem der bekannten Protokolle wird die Information d) ausreichend gesichert.

Ein zuverlässiges Transaktionsprotokoll muss eine feste Bindung von Initiator, d.h. Person (z. B. Bank-Kunde) und den zu übertragenden Daten herstellen. Durch Angriffe, wie beispielsweise Phishing, werden Empfänger-Kontonummer und ggf. auch der Betrag in den von Bank-Kunden initiierten Transaktionen verändert, d.h. gefälscht. Auch durch Malware (Software) auf dem Computer der Person können der Betrag und die Zielkontonummer verändert werden. Zudem erlaubt eine aus der Entfernung gesteuerte Malware, dass der Initiator einer Transaktion nicht mehr der Bank-Kunde selbst, sondern ein Angreifer ist.

Bekannt ist das so genannte Homebanking Computer Interface (HBCI), das von verschiedenen Deutschen Bankengruppen seit 1996 entwickelt und mit Beschluss des Zentralen Kreditausschusses (ZKA) standardisiert wurde. Beim HBCI steht eine Schnittstelle für ein Chipkarten-basiertes Online-Transaktionsprotokoll zur Verfügung. Das Protokoll wurde als Financial Transaction Services (FinTS) vom ZKA weiterentwickelt. Mit HBCI/FinTS wird auf TAN (Transaktionsnummem) -Listen verzichtet und werden stattdessen ein sicherheitsgeprüftes Chipkarten-Lesegerät und eine Ebenfalls sicherheitsgeprüfte Chipkarte eingesetzt, die sich im Besitz des Bank-Kunden befindet. Durch HBCI wird ein abhörsicherer Kommunikationskanal zwischen dem Client-Rechner und dem Bank-Server aufgebaut. Die Transaktionsdaten werden mit dem privaten Schlüssel eines Schlüsselpaares des Bank-Kunden signiert. Dieser Schlüssel ist in der Chipkarte sicher gespeichert. Die Transaktionsdaten und die angebrachte Digitale Signatur werden zum Bank-Server übertragen. Durch Malware auf dem Kunden-Rechner können die Transaktionsdaten jedoch geändert werden, bevor diese unter Einsatz der Chipkarte signiert werden.

Beim TAN-Generatoren-Verfahren werden mobile Token verwendet, die sequentiell zeitgesteuert eine TAN elektronisch erzeugen können. Der TAN-Generator wird dem Bank-Kunden auf dem Postwege zugestellt. Missbrauch ist vor allem dann möglich, wenn der Generator in den Besitz anderer Personen gelangt.

Es wurde bereits vorgeschlagen, Datenübertragungen dadurch vor Fälschung oder Verfälschung zu sichern, dass biometrische Verfahren eingesetzt werden. In klassischen biometrischen Systemen werden zwei Phasen unterscheiden: Die Registrierungsphase (Enrolment), in der die spätere Authentisierung mithilfe eines biometrischen Merkmals vorbereitet wird und die eigentliche Verifikationsphase, in der eine biometrische Probe in digitaler Form genommen wird.

Aus WO 02/078249 A1 ist ein Verfahren und ein System bekannt, wobei ein Schlüssel aus biometrischen Informationen eines Individuums erhalten werden können. Es wird ein Merkmalsvektor von den biometrischen Daten extrahiert und der Vektor wird in ein Codewort transformiert. Das Codewort wird dazu verwendet, einen Schlüssel zu konstruieren. Die Erzeugung des Codeworts hängt außerdem von einem Zufallsvektor ab. Nachdem für ein Individuum ein biometrischer Schlüssel registriert worden ist, kann er z.B. zur Verschlüsselung eines Dokuments eingesetzt werden. Die Datenübertragung wird in der Druckschrift jedoch nicht beschrieben.

WO 02/05077 A2 beschreibt ein Verfahren und ein System zum elektronischen Zugreifen auf Konten, z.B. Finanzkonten, und zum Autorisieren von Transaktionen unter Verwendung einer biometrischen Probe. Es werden eine zuvor aufgezeichnete biometrische Probe und eine biometrische Probe, um den Zugang zu dem Konto anzufragen und die elektronische Transaktion zu autorisieren, miteinander verglichen. US 4,993,068 beschreibt ein Identifikationssystem zum Identifizieren von Benutzern an Fernsteuerungs-Einrichtungen.

WO 2004/019188 A2 beschreibt ein System zur Überprüfung und Einräumung von Nutzungsberechtigungen, wobei ein auf einer Speicherkarte gespeichertes biometrisches Merkmal eines Nutzungsinteressenten genutzt wird. Durch eine Leseeinrichtung werden auf der Speicherkarte befindliche Daten ausgelesen. Eine von der Speicherkarte räumlich getrennte Abtasteinrichtung ist zur Erfassung zumindest eines biometrischen Merkmals des Nutzungsinteressenten vorgesehen. In einer Vergleichseinrichtung werden das durch die Abtasteinrichtung erfasste biometrische Merkmal unddas auf der Speicherkarte gespeicherte biometrische Merkmal auf Übereinstimmung überprüft. Zur Übermittlung des durch die Abtasteinrichtung erfassten biometrischen Merkmals und des auf der Speicherkarte gespeicherten bfometrischen Merkmals an die Vergleichseinrichtung ist eine Datenübertragungseinrichtung vorgesehen.

Bei der Authentisierung stellt sich jedoch das Problem, dass Personen vor Missbrauch ihrer biometrischen Merkmale geschützt werden sollen. Die Privatsphäre der Personen ist zu schützen. Eine ungesicherte Übertragung von Informationen Ober biometrische Charakteristika scheidet daher aus. Auch eine verschlüsselte Übertragung solcher Informationen wird von vielen Personen nicht akzeptiert, da nach der Entschlüsselung beim Empfänger wieder biometrische Merkmale erkennbar vorliegen. Es wurde versucht, dem dadurch zu begegnen, dass biometrische Informationen durch Anwendung einer Einwegfunktion (Hashfunktion) unumkehrbar verändert werden und nur in dieser Form beim Empfänger gespeichert werden. Die Speicherung biometrischer Merkmale beim Empfänger der Daten ist jedoch aufwändig und aus Datenschutzgründen nicht wünschenswert. Außerdem müssen die biometrischen Merkmale vor der Anwendung der Einwegfunktion in unveränderter Form vorliegen. Da der typische Benutzer von Methoden der gesicherten Datenübertragung keine genaue Kenntnis der Verfahrensweise hat, wird auch die einmalige Verwendung der unverschlüsselten biometrischen Merkmalsinformation von vielen Personen nicht akzeptiert. Außerdem müsste der Empfänger der Daten gewährleisten, dass er die unverschlüsselte biometrische Merkmalsinformation irreversibel löscht.

Es ist eine Aufgabe der vorliegenden Erfindung, ein Verfahren, ein Computerprogramm, eine Anordnung und ein System zur Übertragung von Daten anzugeben, die von einer Person oder mehr als einer Person bestätigt sind. Es soll die Sicherheit, dass es sich bei einer die Datenübertragung bestätigenden Person um die erwartete Person handelt, erhöht werden. Insbesondere soll eine Authentisierung der Daten unverfälschbar auf die zu übermittelnden Daten bezogen sein und soll dabei die Privatsphäre der Personen geschützt sein.

Gemäß einem Grundgedanken der vorliegenden Erfindung wird eine-Geheiminformation erzeugt oder vereinbart, die einer Datenverarbeitungseinrichtung zur Verfügung gestellt wird, die später die authentisierten Daten übertragen soll, und die ferner zumindest einer Empfangseinrichtung in unveränderter oder kodierter Form zur Verfügung gestellt wird, wobei die Empfangseinrichtung später die authentisierten Daten empfangen soll. Von der Datenverarbeitungseinrichtung wird die Geheiminformation mit Merkmalsinformationen (biometrische Referenz) verknüpft, die auf Basis zumindest einer biometrischen Charakteristik der Person erzeugt wird, welche später die Datenübertragung bestätigen soll. Die mit der Merkmalsinformation verknüpfte Geheiminformation wird in der Datenverarbeitungseinrichtung als Referenzdatum gespeichert. Bevorzugtermaßen wird die Geheiminformation vor der Verknüpfung für eine spätere Fehlerkorrektur bei der Vorbereitung der authentisierten Datenübertragung aufbereitet. Dazu wird die Geheiminformation von der Datenverarbeitungseinrichtung insbesondere einem Encoding (ENC) eines ECC(Error Correcting Code)-Verfahren unterworfen.

Zur Verknüpfung wird insbesondere eine XOR-Operation der als Binärmuster, insbesondere Bitfolgen (auch Binärvektoren genannt) vorliegenden, zu verknüpfenden Teilinformationen ausgeführt. Eine XOR-Verknüpfung gewährleistet, dass ohne die Kenntnis der einen Teilinformation kein Rückschluss auf die jeweils andere Teilinformation gezogen werden kann. Umgekehrt ist aber mit Kenntnis einer Teilinformation ein Rückschluss auf die andere Teilinformation möglich. Dieser Umstand kann für die Extraktion der Geheiminformation aus dem Referenzdatum genutzt werden.

Eine XOR-Operation bzw. Verknüpfung verknüpft jedes Bit eines ersten binären Eingangsvektors mit dem entsprechenden Bit (d. h. dem an derselben Bitposition stehenden Bit) eines zweiten binären Vektors. Vorzugsweise haben die binären Vektoren die gleiche Länge, d. h. die gleiche Anzahl von Bits. Es ist jedoch auch möglich, mit der Verknüpfung lediglich die Bits zu verknüpfen, die ein entsprechendes Bit in dem anderen Eingangsvektor haben, d. h. die Bits in dem Vektor mit der größeren Länge, die keine entsprechenden Bits in dem Vektor kürzerer Länge haben, nicht zu verknüpfen. Bei der bitweisen XOR-Operation ist das Ergebnis "1", wenn die miteinander verknüpften Bits unterschiedlich sind. Das Ergebnis ist "0", wenn die beiden zu verknüpfenden Bits gleich sind. Die XOR-Operation hat den Vorteil, dass durch erneute Verknüpfung des Ergebnisvektors der ersten XOR-Verknüpfung mit einen der Eingangsvektoren, der jeweils andere Ausgangsvektor erhalten wird. Dies gilt für Vektoren gleicher Länge. Im Fall eines Vektors größerer Länge gilt dies entsprechend für den verkürzten Vektor, der mit der verkürzten Länge die gleiche Länge wie der andere Eingangsvektor hat. Auf ein Ausführungsbeispiel wird noch in der Figurenbeschreibung eingegangen.

Das hier vorgestellte Protokoll bzw. Verfahren realisiert eine Daten-Authentisierung und gleichzeitig eine Personen-Authentisierung. Damit wird die Personen-Authentisierung untrennbar an die Daten-Authentisierung geknüpft. Eine Fälschung der Authentisierung ist nur noch dann möglich, wenn der Erfassungseinrichtung zur Erfassung des biometrischen Charakteristikums der Person erfolgreich ein nicht authentisches Charakteristikum präsentiert wird. In allen anderen Fällen wird die Fälschung für den Empfänger der Daten eindeutig erkennbar.

Insbesondere wird keine Transaktionsnummer benötigt, die auch von einer nicht berechtigten Person eingegeben werden kann. Das Referenzdatum enthält die mit der Geheiminformation verknüpfte biometrische Referenzinformation, welche aus dem biometrischen Charakteristikum der berechtigten Person ermittelt wurde. Wird das biometrische Charakteristikum der berechtigten Person erfasst und daraus die biometrische Probe erzeugt, unterscheidet sich die biometrische Probe nur geringfügig von der biometrischen Referenzinformation. Ein wesentliches Merkmal der Erfindung besteht daher darin, die biometrische Probe dazu zu verwenden, dass die biometrische Referenzinformation aus dem Referenzdatum eliminiert wird und lediglich die allenfalls geringfügig veränderte Geheiminformation extrahiert wird. Um die geringfügigen Unterschiede der so wieder gewonnenen Geheiminformation zu der ursprünglichen Geheiminformation auszugleichen, wird die extrahierte Geheiminformation der Fehlerkorrektur unterzogen. Falls die biometrische Probe aus dem biometrischen Charakteristikum der berechtigten Person erfasst wurde, steht somit wieder die korrekte Geheiminformation zur authentisierten Datenübertragung zur Verfügung. In allen anderen Fällen wird die extrahierte und fehlerkorrigierte Geheiminformation nicht der ursprünglichen Geheiminformation entsprechen. Wird eine solche veränderte Geheiminformation zur Authentisierung der Datenübertragung genutzt, kann dies sicher vom Empfänger festgestellt werden.

Dadurch, dass die zu übertragenden Daten und die korrigierte-Geheiminformation unter Verwendung einer Hash-Funktion codiert und unter Verwendung einer Siegelfunktion miteinander verknüpft werden, kann die Geheiminformation nicht aus den verknüpften und versiegelten Daten extrahiert werden. Die Einwegeigenschaften der Hash-Funktion gewährleistet dies. Ferner gewährleistet die Siegelfunktion, dass die zu übertragenden Daten und die korrigierte Geheiminformation untrennbar verknüpft sind. Es ist somit nicht möglich, die zu übertragenden Daten abzutrennen und durch andere zu übertragende Daten zu ersetzen.

Ein weiterer Gedanke der vorliegenden Erfindung besteht darin, die Datenverarbeitungseinrichtung und die Eingabevorrichtung so auszugestalten und miteinander zu verbinden oder zu koppeln, dass die Software der Datenverarbeitungseinrichtung keinen Manipulationen ausgesetzt ist. Auf diese Merkmale der Erfindung wird im Folgenden noch näher eingegangen:

Vorzugsweise weist die Datenverarbeitungseinrichtung selbst die für eine Erfassung des zumindest einen biometrischen Charakteristikums erforderlichen Mittel, z.B. einen (insbesondere in Bezug auf künstliche Plagiate überwindungssicheren) Fingerabdruckscanner, Venenscanner und/oder Irisscanner auf. Ferner weist die Datenverarbeitungseinrichtung in diesem Falle zumindest eine Erzeugungseinrichtung zur Erzeugung der Merkmalsinformation aus der zumindest einen erfassten biometrischen Charakteristik auf. Diese Erzeugungseinrichtung(en) ist/sind mit der Verknüpfungseinrichtung verbunden, die die Merkmalsinformationen mit der Geheiminformation verknüpft.

Wenn zu authentisierende Daten bestätigt und übertragen werden sollen, werden die Daten vorzugsweise von einer separaten Eingabeeinrichtung, z.B. einem Personal Computer der Person erzeugt und zu der Datenverarbeitungseinrichtung übertragen. Dies hat den Vorteil, dass die Datenverarbeitungseinrichtung frei von Anwendungssoftware sein kann, die die Person oder andere Personen installieren und deinstallieren können. Auch eine möglicherweise ohne Kenntnis der Person vorgenommene Veränderung der Anwendungssoftware durch Malware hat damit keine Auswirkung auf die Datenverarbeitungseinrichtung. Vielmehr wird bevorzugt, dass die Datenverarbeitungseinrichtung eine feste Konfiguration aufweist, die nur von authentisiertem Personal (z.B. Hersteller oder Servicetechniker) erstellt und verändert werden kann. Denkbar ist auch reine Hardware-Implementierung der Datenverarbeitungseinrichtung, die vorzugsweise nicht verändert werden kann. Es ist daher möglich, eine gegen Manipulationen sehr weitgehend sichere Datenverarbeitungseinrichtung zur Verwendung vorzusehen.

Ferner wird bevorzugt, dass die Datenverarbeitungseinrichtung eine Anzeigeeinrichtung aufweist, von der die zu übermittelnden Daten angezeigt werden können. Dies hat den Vorteil, dass die Person, die die Daten bestätigen soll, erkennen kann, welche Daten sie bestätigt und/oder ob die Daten korrekt sind. Dadurch kann ausgeschlossen werden, dass die Daten bei der Übermittlung zu der Datenverarbeitungseinrichtung manipuliert wurden.

Wenn die Daten authentisiert werden sollen, präsentiert die Person, die die Datenübertragung bestätigen soll, d.h. vom Empfänger als Absender der Daten erwartet wird, der Datenverarbeitungseinrichtung zumindest eine biometrische Charakteristik. Die Repräsentation der präsentierten Charakteristik steht damit einer Verarbeitungseinrichtung zur Verfügung. Somit wird dieses zumindest eine biometrische Charakteristikum von der Datenverarbeitungseinrichtung wiederum dazu genutzt, eine Merkmalsinformation (als biometrische Probe) zu erzeugen, die im Idealfall mit der oben bereits erwähnten Merkmalsinformation (biometrische Referenz) identisch ist. In der Praxis kann sich jedoch aufgrund unterschiedlicher Erfassung desselben biometrischen Charakteristikums (z.B. Fingerabdruck) ein Unterschied ergeben. Die unmittelbar zur Vorbereitung der Datenübertragung erzeugte biometrische Probe wird nun dazu verwendet, aus dem gespeicherten Referenzdatum die Geheiminformation zu extrahieren. Hierzu wird insbesondere die Merkmalsinformation (der biometrischen Probe) mit dem Referenzdatum verknüpft, mit dem Ziel, die Geheiminformation zu extrahieren. Wiederum kann eine XOR-Verknüpfung von Binärmustem, z.B. Binärvektoren (d.h. Bitfolgen) angewendet werden, wenn die zu verknüpfende Merkmalsinformation (biometrische Probe) und das Referenzdatum in der entsprechenden Form vorliegen.

Die zurückgewonnene Geheiminformation wird nun unter Verwendung einer "Hash-Funktion" kodiert. "Hash-Funktionen" sind in der digitalen Sicherheitstechnik allgemein bekannt. Die "Hash-Funktion" sollte zumindest die folgenden Eigenschaften haben:

- Sie soll die so genannte Einwegeigenschaft haben, d.h. aus den mit Hilfe der "Hash-Funktion" kodierten Daten sollen die unkodierten Daten nicht ermittelbar sein.
- Ferner soll die "Hash-Funktion" kollisionsresistent sein, d.h. es können keine zwei verschiedene unkodierte Daten gefunden werden, die bei Kodierung unter Verwendung der "Hash-Funktion" zu gleichen kodierten Daten führen.

Ferner wird auf die in der Datenverarbeitungseinrichtung vorliegenden zu bestätigenden Daten ebenfalls die "Hash-Funktion" angewendet, bevor sie zur Empfangseinrichtung übertragen werden. Diese Übertragung der zu bestätigenden Daten kann eine zweite Übertragung zur Empfangseinrichtung bedeuten, wenn die Daten bereits vorab von einer separaten Eingabeeinrichtung, auf der sie erzeugt wurden (z.B. von einem Personal Computer der Person) zur Empfangseinrichtung in unbestätigter Art und Weise und nicht manipulationsgesichert übertragen wurden (dies wird im Folgenden als paralleler Weg bezeichnet).

Grundsätzlich können die zu übertragenden Daten und die Geheiminformation vor oder nach der Anwendung der "Hash-Funktion" durch eine Siegelfunktion verknüpft werden. Bevorzugt wird die Verknüpfung nach der Anwendung der "Hash-Funktion", da in diesem Fall die mit der "Hash-Funktion" kodierte Geheiminformation beim Empfänger vorliegen kann und die gegebenenfalls über einen parallelen Weg bereits zum Empfänger übertragenen Daten mit Hilfe der "Hash-Funktion" kodiert und mit der kodierten Geheiminformation verknüpft werden kann, um die von der Datenverarbeitungseinrichtung empfangenen authentisierten Daten damit nach nochmaliger Anwendung der Siegelfunktion zu vergleichen.

Die Anwendung der Siegelfunktion im oben beschriebenen Verfahrens hat die folgenden Vorteile:

- Das Siegel wird angebracht, wenn die (korrigierte) Geheiminformation vorliegt.
- Die Geheiminformation konnte wie oben dargestellt nur mit Hilfe des biometrischen Charakteristikums von derjenigen Person rekonstruiert werden, für die auch die biometrische Referenz erstellt wurde.

Die Integrität und Authentizität der zu bestätigenden Daten kann daher sichergestellt werden. Eine bevorzugte Ausführungsform der Berechnung des Siegels ist ein auf Hash-Funktionen basierendes MAC (Message-Authentication-Code) Verfahren.

Unter Biometrie versteht man ein Messverfahren zur Wiedererkennung von Personen. Der entsprechende Standard ISO-SC37 des Internationalen Standardisierungs-Komitees definiert den Begriff "biometrics" wie folgt: "automated recognition of individuals based on their behavioural and biological characteristics". Biometrische Verfahren analysieren demnach das Verhalten des Menschen und/oder eine Eigenschaft der biologischen Charakteristika. Die biologischen Charakteristika gliedern sich einerseits in anatomische Charakteristika - die geprägt werden durch Strukturen des Körpers und andererseits in physiologische Charakteristika - die geprägt werden durch Funktionen des Körpers wie beispielsweise die Erkennung der Stimme. Jedes Charakteristikum, das reproduzierbar als biometrische Probe erfasst werden kann, ist für die vorliegende Erfindung geeignet.

Die biometrische Authentisierung liefert im allgemeinen eine eindeutige Verknüpfung einer Person mit ihrer Identität unabhängig davon, wo diese Identität gespeichert ist. Der Vorgang der biometrischen Wiedererkennung lässt sich bei bekannten Verfahren in die folgenden Schritte untergliedern:

- Erfassung der biologischen Charakteristika mit geeigneten Sensoren (z. B. Kamera, Mikrofon, Fingerabdruckscanner) und Speicherung als digitale Repräsentation (z.B. Bild, Sprachaufzeichnung).
- Vorverarbeitung zur Datenverbesserung oder -bereinigung.
- Merkmalsextraktion zur signifikanten Beschreibung der Muster.
- Vergleich der Merkmale der biometrischen Probe mit der biometrischen Referenz.

Die Erfindung nutzt zumindest den ersten Schritt und optional auch den zweiten Schritt, nicht aber den dritten und vierten Schritt. Vielmehr wird die biometrische Probe dazu genutzt, die vorhandene und abgespeicherte Geheiminformationen zu extrahieren. Somit wird die Privatsphäre der sich authentisierenden Personen geschützt, denn keine unmittelbare Repräsentation des Charakteristikum wird mit den Daten übermittelt. Die Erfindung ist nicht auf die Nutzung bestimmter biometrischer Charakteristika von Personen beschränkt. Andererseits kann jedes geeignete Erfassungsverfahren in Zusammenhang mit der vorliegenden Erfindung angewendet werden, z. B. Gesichtserkennung, Fingerbildbzw. Fingerabdruckerkennung, Venenmustererkennung und Erkennung der Iris. Die Eignung ergibt sich unter Anderem aus den Fähigkeiten des Erfassungsverfahrens, ein künstliches Plagiat zu detektieren und zurückzuweisen. Insbesondere wird ein Verfahren zum Übertragen von Daten vorgeschlagen, wobei die Daten von zumindest einer Person bestätigt sind und wobei das Verfahren folgende Schritte aufweist:

- die zu übertragenden Daten werden von einer Eingabevorrichtung empfangen und/oder erzeugt, wobei die Eingabevorrichtung von der Person bedienbar ist,
- die Daten werden von der Eingabevorrichtung zu einer Datenverarbeitungseinrichtung zur Aufbereitung der Daten für eine authentisierte Datenübertragung übermittelt,
- zum Zweck einer Authentisierung durch die Person von der Datenverarbeitungseinrichtung zumindest ein biometrisches Charakteristikum der Person erfasst wird, um daraus eine Merkmalsinformation als biometrische Probe zu erzeugen,

- von der Datenverarbeitungseinrichtung wird ein darin gespeichertes Referenzdatum abgerufen, wobei das Referenzdatum eine biometrische Referenzinformation aufweist, die mit einer Geheiminformation verknüpft wurde, wobei die biometrische Referenzinformation aus zumindest einem biometrischen Charakteristikum der Person abgeleitet wurde, die die authentisierte Datenübertragung bestätigen soll,
- die Datenverarbeitungseinrichtung verknüpft die biometrische Probe und das Referenzdatum derart, dass bei Übereinstimmung der biometrischen Referenzinformation mit der biometrischen Probe, die Geheiminformation aus dem Referenzdatum extrahiert wird,
- die extrahierte Geheiminformation wird einer Fehlerkorrektur unterzogen, um Abweichungen aufgrund auf unterschiedliche Weise erfasster biometrischer Charakteristika und daher entstandenen Abweichungen zwischen biometrischer Probe und biometrischer Referenzinformation zu korrigieren,
- die zu übertragenden Daten und die korrigierte Geheiminformation werden von der Datenverarbeitungseinrichtung unter Verwendung einer Hash-Funktion kodiert und unter Verwendung einer Siegelfunktion miteinander verknüpft, so dass authentisierte, gemäß der Siegelfunktion versiegelte Daten gebildet werden, und
- die authentisierten Daten werden zur Übertragung ausgegeben.

Insbesondere werden die von der Person bestätigten, ausgegebenen authentisierten Daten zu einer Empfangseinrichtung übertragen, wobei die Empfangseinrichtung über die mit der Hash-Funktion kodierte Geheiminformation verfügt, wobei die Empfangseinrichtung die nicht authentisierten Daten über einen parallelen Weg empfängt, die nicht authentisierten Daten unter Verwendung der Hash-Funktion kodiert und mit der bereits unter Verwendung der Hash-Funktion kodierten Geheiminformation verknüpft, um so Vergleichsdaten zu erhalten, und wobei die Empfangseinrichtung die Vergleichsdaten mit den empfangenen authentisierten Daten vergleicht und überprüft, ob die Daten übereinstimmen.

Bezüglich dem Enrolment wird vorgeschlagen, dass zur Erzeugung des Referenzdatums von der Datenverarbeitungseinrichtung die Geheiminformation einer Operation unterzogen wird, die der umgekehrten Fehlerkorrektur gemäß dem oben definierten Verfahren entspricht, wobei die Datenverarbeitungseinrichtung auf Basis von zumindest einer biometrischen Charakteristik der Person, die später Datenübertragungen bestätigen soll, eine biometrische Referenz erzeugt, und die biometrische Referenz und die der umgekehrten Fehlerkorrektur unterzogene Geheiminformation miteinander verknüpft, so dass das Referenzdatum gebildet wird, und das Referenzdatum in einem Speicher der Datenverarbeitungseinrichtung gespeichert wird.

Außerdem wird eine Anordnung zum Übertragen von Daten vorgeschlagen, die von einer Person bestätigt sind, wobei die Anordnung Folgendes aufweist:

- eine Datenverarbeitungseinrichtung zur Aufbereitung der Daten für eine Übertragung authentisierter Daten,
- eine Eingabevorrichtung, die mit der Datenverarbeitungseinrichtung verbunden ist, wobei die Eingabevorrichtung von der Person bedienbar ist, um die zu übertragenden Daten zu empfangen und/oder zu erzeugen,
- wobei die Datenverarbeitungseinrichtung zum Zweck einer Authentisierung durch die Person eine Erfassungseinrichtung aufweist, die ausgestaltet ist, zumindest ein biometrisches Charakteristikum der Person zu erfassen, um daraus eine Merkmalsinformation als biometrische Probe zu erzeugen,
- wobei die Datenverarbeitungseinrichtung einen Datenspeicher aufweist, in dem ein Referenzdatum gespeichert ist, wobei das Referenzdatum eine biometrische Referenzinformation aufweist, die mit einer Geheiminformation verknüpft wurde, wobei die biometrische Referenzinformation aus zumindest einem biometrischen Charakteristikum der Person abgeleitet wurde, die die authentisierte Datenübertragung bestätigen soll, und wobei die Datenverarbeitungseinrichtung ausgestaltet ist, das Referenzdatum aus dem Datenspeicher abzurufen,
- wobei die Datenverarbeitungseinrichtung eine Verknüpfungseinrichtung aufweist, die ausgestaltet ist, die biometrische Probe und das Referenzdatum derart zu verknüpfen, dass bei Übereinstimmung der biometrischen Referenzinformation mit

der biometrischen Probe, die Geheiminformation aus dem Referenzdatum extrahiert wird,

- wobei die Datenverarbeitungseinrichtung eine Fehlerkorrektureinrichtung aufweist, die ausgestaltet ist, die extrahierte Geheiminformation einer Fehlerkorrektur zu unterziehen, um Abweichungen aufgrund auf unterschiedliche Weise erfasster biometrischer Charakteristika und daher entstandenen Abweichungen zwischen biometrischer Probe und biometrischer Referenzinformation zu korrigieren,
- wobei die Datenverarbeitungseinrichtung ausgestaltet ist, die zu übertragenden Daten von der Eingabevorrichtung zu empfangen, die zu übertragenden Daten und die korrigierte Geheiminformation unter Verwendung einer Hash-Funktion zu kodieren und unter Verwendung einer Siegelfunktion miteinander zu verknüpfen, so dass authentisierte, gemäß der Siegelfunktion versiegelte Daten gebildet werden, und die authentisierten Daten zur Übertragung auszugeben.

Die Datenverarbeitungseinrichtung ist für das Enrolment insbesondere ausgestaltet, zur Erzeugung des Referenzdatums die Geheiminformation einer Operation zu unterziehen, die der umgekehrten Fehlerkorrektur gemäß der oben beschriebenen Verfahrensweise entspricht, wobei die Datenverarbeitungseinrichtung ausgestaltet ist, auf Basis von zumindest einer biometrischen Charakteristik der Person, die später Datenübertragungen bestätigen soll, eine biometrische Referenz zu erzeugen und die biometrische Referenz und die der umgekehrten Fehlerkorrektur unterzogene Geheiminformation miteinander zu verknüpfen, so dass das Referenzdatum gebildet wird, und das Referenzdatum in einem Speicher der Datenverarbeitungseinrichtung gespeichert wird.

Ferner gehört zum Umfang der Erfindung ein System, das die Anordnung und eine Empfangseinrichtung aufweist, wobei die Empfangseinrichtung mit der Eingabevorrichtung und der Datenverarbeitungseinrichtung verbunden ist, wobei die Empfangseinrichtung einen Datenspeicher aufweist, in dem die mit der Hash-Funktion kodierte Geheiminformation gespeichert ist, wobei die Empfangseinrichtung ausgestaltet ist, die nicht authentisierten Daten über einen parallelen Weg zu empfangen, die nicht authentisierten Daten unter Verwendung der Hash-Funktion zu kodieren und mit der bereits unter Verwendung der Hash-Funktion kodierten Geheiminformation zu verknüpfen, um so Vergleichsdaten zu erhalten, und wobei die Empfangseinrichtung ausgestaltet ist, die Vergleichsdaten mit den empfangenen authentisierten Daten zu vergleichen und zu überprüfen, ob die Daten übereinstimmen.

Ebenfalls gehört zum Umfang der Erfindung ein Computerprogramm, das zur Ausführung der oben genannten Verfahrensschritte ausgestaltet ist, wenn das Computerprogramm in einen Arbeitsspeicher der Datenverarbeitungseinrichtung geladen ist. Das Computerprogramm steuert die Datenverarbeitungseinrichtung folgendermaßen:

- zum Zweck einer Authentisierung durch die Person von der Datenverarbeitungseinrichtung wird zumindest ein biometrisches Charakteristikum der Person erfasst und wird daraus eine Merkmalsinformation als biometrische Probe erzeugt,
- von der Datenverarbeitungseinrichtung wird ein darin gespeichertes Referenzdatum abgerufen, wobei das Referenzdatum eine biometrische Referenzinformation aufweist, die mit einer Geheiminformation verknüpft wurde, wobei die biometrische Referenzinformation aus zumindest einem biometrischen Charakteristikum der Person abgeleitet wurde, die die authentisierte Datenübertragung bestätigen soll,
- die Datenverarbeitungseinrichtung verknüpft die biometrische Probe und das Referenzdatum derart, dass bei Übereinstimmung der biometrischen Referenzinformation mit der biometrischen Probe, die Geheiminformation aus dem Referenzdatum extrahiert wird,
- die extrahierte Geheiminformation wird einer Fehlerkorrektur unterzogen, um Abweichungen aufgrund auf unterschiedliche Weise erfasster biometrischer Charakteristika und daher entstandenen Abweichungen zwischen biometrischer Probe und biometrischer Referenzinformation zu korrigieren,
- die zu übertragenden Daten und die korrigierte Geheiminformation werden von der Datenverarbeitungseinrichtung unter Verwendung einer Hash-Funktion kodiert und unter Verwendung einer Siegelfunktion miteinander verknüpft, so dass authentisierte, gemäß der Siegelfunktion versiegelte Daten gebildet werden, und
- die authentisierten Daten werden zur Übertragung ausgegeben.

Alternativ zu dem Computerprogramm können die Verfahrensschritte der vorliegenden Erfindung durch entsprechend ausgestaltete Hardware ausgeführt werden, z. B. durch Anwendungsspezifische Integrierte Schaltungen (Application Specific Integrated Circuit - ASIC) oder FPGA (Field Programmable Gate Array).

Bei einer Ausführungsform, die das Übertragen von Transaktionsdaten zu Banken betrifft, ist ein sicherer Online-Banking-Server (OBS) vorgesehen, der folgende Eigenschaften aufweist. Bei anderen Anwendungen der erfindungsgemäßen Datenübertragung (z. B. Online-Auktion) kann ein entsprechender Server mit den gleichen Eigenschaften verwendet werden: Der OBS hat Zugriff auf Kundendaten, etabliert eine Kommunikation mit der Online-Banking-Software (BSW), die auf dem unsicheren Rechner des Kunden betrieben wird, und führt Transaktionen aus. Der OBS ist in der Lage, eine zusätzliche, sichere Datenverarbeitungseinrichtung beim Kunden als Kommunikationspartner zu erkennen und eine Verbindung (insbesondere eine VPN-, Virtual Private Network-Verbindung) damit aufbauen. Die Datenverarbeitungseinrichtung kann als Biometric-Transaction-Device (BTD) bezeichnet werden, da sie biometrische Charakteristika der Personen erfassen und Transaktionen (d.h. Datenübertragungen) vorbereiten kann. Zur Erfassung der geometrischen Charakteristika weist es eine Erfassungseinrichtung auf, die als Biometric-Capture-Device (BCD) oder Sensor bezeichnet werden kann. Die Erfassungseinrichtung ist vorzugsweise als sicher gegen Manipulationen der Erfassung biometrische Charakteristika eingestuft (zertifiziert) und somit insbesondere für den nicht professionell überwachten Einsatz im Heimbereich oder Bürobereich geeignet.

Wenn in dieser Beschreibung von sicheren und unsicheren Einrichtungen die Rede ist, bedeutet dies zunächst, dass die sichere Einrichtung sicherer gegen Manipulationen ist als die unsichere Einrichtung. Vorzugsweise ist die sichere Einrichtung gemäß einem vorgegebenen Sicherheitsstandard geprüft und zertifiziert. Insbesondere soll die sichere Einrichtung gegen Malware geschützt sein.

Das BTD weist eine sichere Hardware auf, ähnlich wie ein Kartenleser oder Secoder gemäß den ZKA-Anforderungen. Alternativ kann sie eine Erweiterung der bereits für geschützte Datenübertragung verfügbaren USB-Sticks sein. Eine weitere Alternative ist ein sicheres Mobiltelefon. Das BTD kann einen OBS als Kommunikationspartner erkennen und eine sichere (z. B. VPN-) Verbindung mit dem OBS aufbauen. Es kann ferner eine Transaction-Order (TRO, einen Auftrag zur Ausführung einer Datenübertragung) von der BSW empfangen und so darstellen (zum Beispiel auf einem Bildschirm und/oder akustisch), dass der Benutzer die zu übertragenden Daten erkennen kann. Dargestellt werden zumindest die wesentlichen Transaktionsdaten, die vorzugsweise in Form eines Transaction-Order-Records (TOR) zusammengefasst sind. Der TOR weist außer den eigentlichen zu übertragenden Daten einen Transaktionsidentifikator (TID) auf.

Die BSW wird auf dem unsicheren Kunden-Rechner ausgeführt, der somit zum Beispiel durch Trojanische Pferde und so genannte Root-Kits gefährdet sein kann. Die BSW kann eine auf dem Kunden-Rechner installierte Software sein oder eine browserbasierte Applikation sein. Sie kommuniziert mit dem OBS und transferiert Aufträge in Form eines Transaction-Order-Record (TOR). Ein TOR beinhaltet einen Transaktionsidentifikator (TID), eine Sender-Account-Number (SAN, Kontonummer des Kunden), eine Receiver-Account-Number (RAN, Kontonummer des Empfängers der Überweisung), das Ordered Amount (ORA, den Geldbetrag, der überwiesen werden soll). Der Kunden-Rechner mit der BSW ist verbunden mit dem BTD.

Die Kommunikation zwischen BSW und BTD kann auf verschiedene Weise realisiert werden. Zum Beispiel kann sie drahtlos oder mittels Kabel, etwa drahtlos unter dem Bluetooth-Protokoll oder unter Verwendung eines USB (Universal Serial Bus) realisiert werden. Auch eine Datenübertragung über eine optische Schnittstelle wie in HDD 1.3.2 beschrieben ist möglich. Zum Beispiel bei Verwendung eines Mobiltelefons als BTD kann eine Foto-Schnittstelle des BTD benutzt werden, wobei die Kamera des BTD zum Einsatz kommt, indem sie eine bildliche Darstellung des TOR erfasst.

Bei einer Weiterbildung des Verfahrens wird von der Datenverarbeitungseinrichtung unter Verwendung der Geheiminformation und/oder unter Verwendung zumindest eines Teils der zu übertragenden Daten eine Transaktionsnummer erzeugt und wird die Transaktionsnummer zur Sicherung einer Übertragung der authentisierten Daten ausgegeben. Dabei wird bevorzugt, dass auf den Teil der zu übertragenden Daten und/oder auf die Geheiminformation zunächst die Hash-Funktion angewendet wird und die so modifizierten zu übertragenden Daten zur Erzeugung einer Transaktionsnummer verwendet werden. Insbesondere wenn die Geheiminformation verwendet wird, die aus dem Referenzdatum extrahiert wurde, wird durch die davon abhängig erzeugte Transaktionsnummer eine besonders hohe Sicherheit der Datenübertragung erreicht. Die Empfangseinrichtung kann ebenfalls unter Verwendung der übertragenen Daten und/ oder der Geheiminformation die Berechnung der Transaktionsnummer nachvollziehen und somit die Authentizität der Transaktionen anhand der Transaktionsnummer überprüfen.

Ausführungsbeispiele der Erfindung werden nun unter Bezugnahme auf die beigefügte Zeichnung beschrieben. Die einzelnen Figuren der Zeichnung zeigen:

Fig. 1     schematisch eine Anordnung mit einer Datenverarbeitungseinrichtung, dem Benutzer der Einrichtung und einer Empfangseinrichtung, die später von dem Benutzer authentisierte und bestätigte Daten empfangen soll, wobei anhand von Fig. 1 das Enrolment beschrieben wird,

Fig. 2     die Anordnung gemäß Fig. 1, wobei jedoch außerdem die auf einer unsicheren Eingabevorrichtung (z.B. Personal Computer) des Benutzers ausgeführte Software dargestellt ist,

Fig. 3     eine Alternative zu der in Fig. 2 dargestellten Anordnung,

Fig. 4     ein Beispiel für eine Verknüpfung eines ersten und eines zweiten binären Vektors mit einer XOR-Verknüpfung,

Fig. 5     ein Beispiel für eine zweite Verknüpfung zweier binärer Vektoren mit einer XOR-Operation und

Fig. 6-10   ein Beispiel für die Ausführung eines Fehlerkorrekturverfahrens.

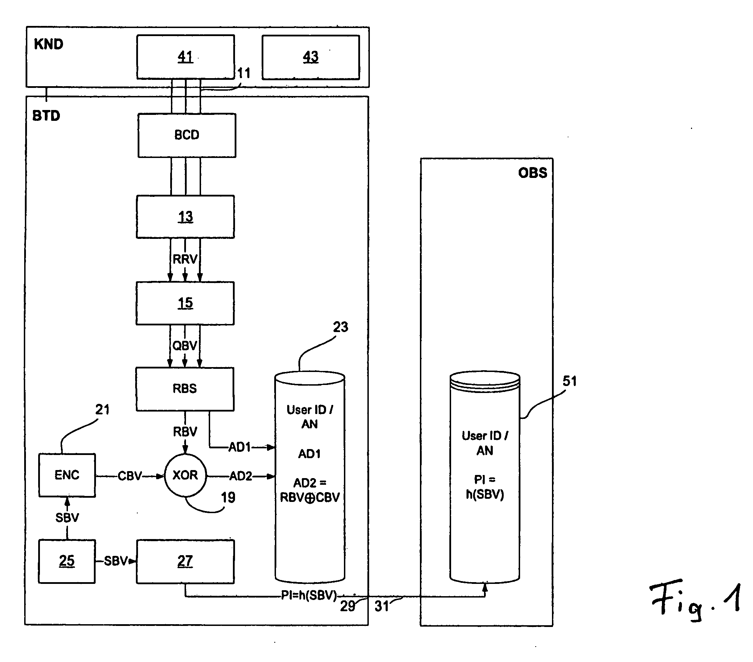

Fig. 1 zeigt eine vorzugsweise als sichere Einrichtung zertifizierte Datenverarbeitungseinrichtung BTD. Die Datenverarbeitungseinrichtung BTD weist eine Schnittstelle 11 auf, über die zumindest ein biometrisches Charakteristikum erfasst und somit Merkmalsinformation in die Datenverarbeitungseinrichtung hineingelangen kann. Z.B. weist die Datenverarbeitungseinrichtung BTD einen entsprechenden Sensor oder mehrere solche Sensoren zum Erfassen zumindest eines biometrischen Charakteristikums einer Person auf. Der oder die Sensoren sind mit dem Bezugszeichen BCD bezeichnet. Mit dem oder den Sensoren BCD ist eine Einrichtung 15 zum Binarisieren der Merkmalsinformation verbunden. Diese Binarisierungseinrichtung 15 ist wiederum mit einer optional vorgesehenen Selektierungseinrichtung RBS verbunden, die der Steigerung der biometrischen Erkennungsleistung dient. Die optional vorhandene Selektierungseinrichtung analysiert die biometrische Merkmalsinformation, die z.B. in Form eines Binärvektors vorliegt, nach geeigneten Komponenten und/oder selektiert solche geeigneten Komponenten. Auf ein Beispiel wird noch eingegangen.

Ein Ausgang der Selektierungseinrichtung oder der Einrichtung 15 ist mit einer Verknüpfungseinrichtung 19 verbunden, die wiederum zwei weitere Ein- und Ausgänge, nämlich zu einer Fehlerkorrektureinrichtung 21 und zu einem Datenspeicher 23, der Datenverarbeitungseinrichtung BTD hat. Die Fehlerkorrektureinrichtung 21 ist mit einer Einrichtung 25 zur Bereitstellung der Geheiminformation verbunden. Außerdem ist die Einrichtung 25 mit einer Datenverarbeitungseinrichtung 27 zur Anwendung einer Hash-Funktion verbunden.

Ferner weist die Datenverarbeitungseinrichtung BTD einen Ausgang 29 zum Ausgeben und Übertragen von Daten zu einer entfernten Empfangseinrichtung, hier im Ausführungsbeispiel die Empfangseinrichtung OBS, auf. Die Datenübertragung verläuft drahtlos und/oder über eine Kabelverbindung 31. Die zur Ausführung der eigentlichen Datenübertragung zwischen der Datenverarbeitungseinrichtung BTD und der Empfangseinrichtung OBS erforderlichen Sende- und Empfangseinrichtungen sind in den Figuren nicht näher dargestellt. Grundsätzlich können diese Einrichtungen wie bekannt ausgeführt sein und werden hier daher nicht näher beschrieben.

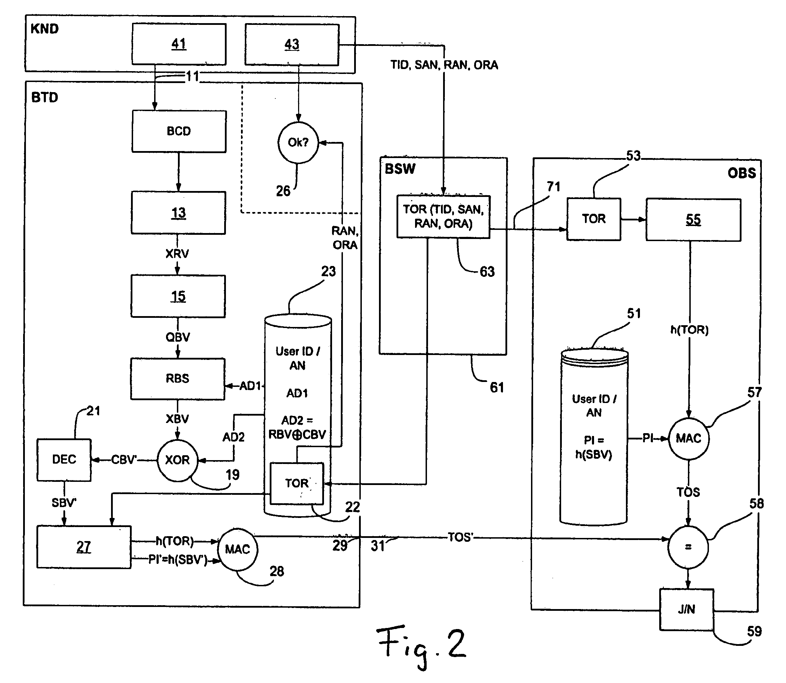

Fig. 1 zeigt ebenso wie Fig. 2 außerdem schematisch einen Benutzer KND. Der Benutzer KND weist zumindest ein biometrisches Charakteristikum 41 auf. Ferner ist der Nutzer KND in der Lage, Informationen in ein in Fig. 1 nicht dargestelltes Gerät einzugeben. Die eingegebenen Informationen sind in Fig. 1 und 2 mit einem Rechteck dargestellt, das mit dem Bezugszeichen 43 bezeichnet ist.

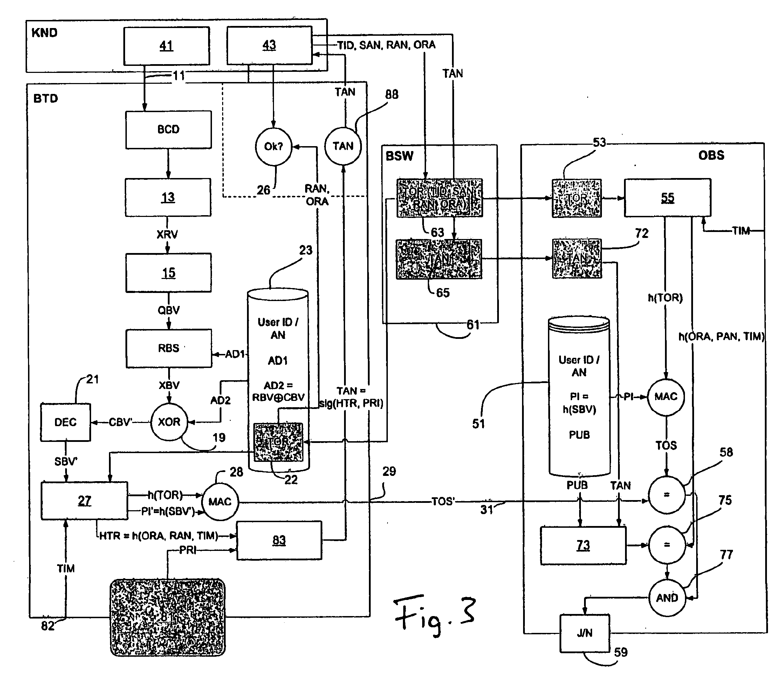

Die Empfangseinrichtung OBS weist einen Datenspeicher 51 auf. Weitere optional vorhandene Einrichtungen der Datenverarbeitungseinrichtung BTD und der Empfangseinrichtung OBS sind in Fig. 1 nicht dargestellt. Ferner können die Einrichtungen BTD, OBS nicht nur optional vorhandene zusätzliche Einrichtungen aufweisen, auf die noch anhand von Fig. 2 und Fig. 3 näher eingegangen wird.

Wenn in dieser Beschreibung von Einrichtungen der Empfangseinrichtung und der Sendeeinrichtung die Rede ist, dann kann es sich dabei um durch Hardware und/oder Software realisierte Einrichtungen handeln. Insbesondere bei der Realisierung durch Software können zumindest Teile der Einrichtungen gemeinsame Teile sein, die auch von anderen Einrichtungen genutzt werden können. Z.B. kann eine Softwareroutine sowohl von der Fehlerkorrektureinrichtung 21 als auch von der Einrichtung 27 zur Anwendung einer Hash-Funktion genutzt werden. Bei der Datenverarbeitungseinrichtung BTD kann es sich daher um eine Einrichtung handeln, die speziell für den hier beschriebenen Zweck ausgestaltete Hardwareelemente (z.B. ASIC - Application Specific Integrated Circuit) aufweist. Es kann sich jedoch auch um eine von dem grundsätzlichen Hardwareaufbau konventionelle Einrichtung handeln, z.B. ähnlich einem Personal Computer, die zumindest einen Arbeitsspeicher und zumindest einen Datenprozessor aufweist, welche über einen Datenbus miteinander verbunden sind. In diesem Fall wird der Betrieb der Einrichtung durch Software gesteuert. Ein entsprechendes Computerprogramm gehört daher zum Umfang der Erfindung.

Bei der Empfangseinrichtung OBS handelt es sich typischerweise um einen Server, z.B. einen Bank-Server zum Verarbeiten von Kunden-Transaktionen.

Im Folgenden wird nun die Funktionsweise der in Fig. 1 dargestellten Anordnung zum Zwecke des Enrolment beschrieben. Dabei kommt im Ausführungsbeispiel vorzugsweise ein Biometric Transaction Device BTD als Datenverarbeitungseinrichtung zum Einsatz, das als sicher getestet zertifiziert ist.

Zunächst wird von dem BTD zumindest eine biometrische Repräsentation zumindest eines biometrischen Charakteristikums erzeugt. Vorzugsweise werden mehrere biometrische Repräsentationen von demselben Charakteristikum erzeugt und aus diesen Repräsentationen Merkmalsinformation berechnet. Dies hat den Vorteil, dass ein Durchschnittswert der Merkmalsinformation erhalten werden kann und/oder mögliche Abweichungen bei der Erfassung desselben Charakteristikums ermittelt werden können. Dadurch lässt sich insbesondere der notwendige Toleranzbereich für das Fehlerkorrekturverfahren reduzieren. Grundsätzlich kann die Erzeugung der biometrischen Repräsentation einer biometrischen Charakteristik wie aus dem Stand der Technik für sich genommen bekannt erfolgen. Die eigentliche Erfassung des Charakteristikums und Erzeugung entsprechender Merkmalsinformationen findet durch die Erfassungseinrichtung BCD, z. B. eine Kamera, statt. Die entsprechende Sensorschnittstelle 11, z. B. das Kameraobjektiv, ist oben in Fig. 1 dargestellt.

Das Ausgangssignal der Erfassungseinrichtung BCD wird zu Merkmalsextraktionseinrichtung 13 übertragen. Das Ausgangssignal der Einrichtung 13 ist in Fig. 1 mit RRV bezeichnet. Der Merkmalsvektor RRV wird an die Binarisierungseinrichtung 15 übertragen.

Die Binarisierungseinrichtung 15 erzeugt aus dem Ausgangssignal der Merkmalsextraktionseinrichtung 13 binarisierte Daten, vorzugsweise einen binarisierten Merkmalsvektor QBV. Die optionale Verarbeitungseinheit RBS selektiert aus QBV die relevante Information. Außerdem kann die Merkmalsextraktionseinrichtung oder die optionale RBS Verarbeitungseinheit aber Hilfsdaten AD1 zu dem Datenspeicher 23 ausgeben. Bei den Hilfsdaten handelt es sich um Daten, die bezüglich der Privatsphäre des Benutzers KND nicht besonders schützenswert sind. Diese Hilfsdaten AD1 werden anhand eines speziellen Ausführungsbeispiels noch näher beschrieben. Bei Vorhandensein der optionalen Selektionseinrichtung RBS werden die von der Binarisierungseinrichtung 15 binarisierten Merkmalsinformationen an die Selektionseinrichtung RBS ausgegeben, welche daraus die biometrische Referenzinformation RBV selektiert. Die biometrische Referenzinformation RBV wird mit einer für die spätere Fehlerkorrektur aufbereiteten Geheiminformation CBV von der Verknüpfungseinrichtung 19 verknüpft, insbesondere in einer XOR-Operation, so dass zweite Hilfsdaten AD2 (als Referenzdatum) erzeugt werden, die in dem Datenspeicher 23 für die spätere Verwendung abgelegt werden. Falls die Selektionseinrichtung RBS nicht vorhanden ist, wird direkt das Ausgangssignal der Binarisierungseinrichtung 15 als biometrische Referenzinformation der Verknüpfungseinrichtung 19 zugeführt.

Grundsätzlich können weitere Varianten der in Fig. 1 dargestellten Anordnung vorkommen, die ebenfalls in der Lage sind, das Grundprinzip der vorliegenden Erfindung auszuführen. Insbesondere kann die in Fig. 1 dargestellte Kombination der Einrichtung BCD, 13, 15, RBS anders ausgeführt sein. Zu den Grundkomponenten der Datenverarbeitungseinrichtung gehört im Allgemeinen lediglich eine Einrichtung zur Erstellung der biometrischen Referenzinformation während des Enrolment und Auch später der biometrischen Probe während der Verifikation, eine Verknüpfungseinrichtung, eine Einrichtung zur Bereitstellung der Geheiminformation, wobei die Verknüpfungseinrichtung die bereitgestellte Geheiminformation und die biometrische Referenzinformation zu dem Referenzdatum verknüpft und in dem Datenspeicher ablegt.

In dem speziell in Fig. 1 dargestellten Ausführungsbeispiel wird die Geheiminformation von der Einrichtung 25 bereitgestellt. Bei dieser Einrichtung kann es sich z. B. um einen Zufallszahlengenerator handeln. Alternativ kann ein Chipkartenleser vorgesehen sein, in den eine Chipkarte des Benutzers eingeführt ist, auf der die Geheiminformation gespeichert ist. Der Chipkartenleser liest die Geheiminformation von der Chipkarte aus und stellt sie der Datenverarbeitungseinrichtung somit zur Verfügung. Weitere Möglichkeiten bestehen zur Bereitstellung der Geheiminformation. Etwa kann ein so genannter Token (Schlüssel) verwendet werden, wie er bereits bei anderen Transaktionsverfahren bekanntermaßen zum Einsatz kommt. Ferner ist es möglich, dass die Geheiminformation von der Empfangseinrichtung, z. B. der Einrichtung OBS, bereitgestellt und zu der Datenverarbeitungseinrichtung übertragen wird, z. B. über den Postweg. In der Darstellung der Fig. 1 wird sie an der Stelle der Einrichtung 25 in den Prozessweg eingespeist.

Im Ergebnis steht am Ausgang der Einrichtung 25 die Geheiminformation zur Verfügung, die mit dem Kürzel SBV bezeichnet ist.

Diese Geheiminformation SBV wird der Fehlerkorrektureinrichtung 21 zur Vorbereitung der später auszuführenden Fehlerkorrektur zugeführt. Die Fehlerkorrektureinrichtung 21 führt insbesondere ein Encoding (ENC) des Error-Correcting-Code (ECO)-Verfahrens aus. Als Ergebnis dieser umgekehrten Fehlerkorrektur entsteht die für die Verknüpfung mit der biometrischen Probe vorbereitete Geheiminformation CBV zur Verfügung.

In dem Ausführungsbeispiel der Fig. 1 wird die Geheiminformation in der Datenverarbeitungseinrichtung erzeugt oder unmittelbar dort erstmalig eingespeist. In diesem Fall wird die Geheiminformation SBV von der Einrichtung 25 einer Einrichtung 27 zur Anwendung einer Hash-Funktion zugeführt. Nach Ausführung der Hash-Funktion, d.h. nachdem die Geheiminformation unumkehrbar verändert wurde, wird diese veränderte Geheiminformation PI dem Empfänger zugeführt. Dies geschieht in dem Ausführungsbeispiel über den Ausgang 29 und die Datenübertragungsverbindung 31. Die veränderte Geheiminformation PI wird in dem Datenspeicher 51 der Empfangseinrichtung OBS gespeichert.

Im Folgenden werden noch besonders bevorzugte Ausführungsbeispiele für den Betrieb der Datenverarbeitungseinrichtung BTD oder für Teile davon beschrieben.

Die zuvor in dem Ausführungsbeispiel bezeichnete Merkmalsinformation wird beim Enrolment als biometrische Referenzinformation, beim Authentisierungsvorgang (auch als Verifikation bezeichnet) jedoch als biometrische Probe bezeichnet. Die Hilfsdaten AD2, die durch die Verknüpfung der biometrischen Referenzinformaton mit der vorbereiteten Geheiminformation CBV erzeugt wurden, wurden vor der Figurenbeschreibung als Referenzdatum bezeichnet.

Das Enrolment dient insbesondere dazu, den Benutzer zu registrieren, bevor das System genutzt werden kann. Dazu präsentiert der Benutzer vorzugsweise mehrfach ein biometrisches Charakteristikum (z. B. das Venenbild des rechten Mittelfingers). Daraus werden von der Erfassungseinrichtung BCD geordnete Merkmalsvektoren gleicher Länge extrahiert. Zwei Prozesse laufen nun vorzugsweise zeitgleich ab.

Der erste Prozess, ausgeführt durch die Binarisierungseinrichtung 15, erzeugt eine binäre Repräsentation der biometrischen Daten. Dazu werden statistische Daten über Merkmalsvektoren des Charakteristikums (z. B. Venenbilder des rechten Mittelfingers einer Population, d. h. nicht oder nicht nur des Benutzers sondern einer Vielzahl von Personen) genutzt, um eine Quantisierung der Eingabe-Merkmalsvektoren vorzunehmen. Die so entstandenen quantisierten Binärvektoren werden durch wie Selektionseinrichtung RBS analysiert. Wieder werden die statistischen Daten genutzt, diesmal um Positionen in den Vektoren zu identifizieren, an denen sich Bits befinden, die sich einerseits vom Mittel aller Vektoren der Population unterscheiden aber auch stabil und somit reproduzierbar in den Eingabe-Merkmalen vorkamen. Die Positionen werden als erste Hilfsdaten AD1 zu dem Datenspeicher 23 übertragen. Der Binärvektor, der die stabilsten Komponenten aller erzeugten Binärvektoren enthält, wird als biometrische Probe RBV der Verknüpfungseinrichtung 19 zugeführt.

In dem zweiten Prozess wird von der Einrichtung 25 ein binärer Geheimnis-Vektor SBV erzeugt. Der Hashwert h(SBV) dieses Vektors wird in dem Datenspeicher gespeichert. Aufgrund der Einwegeigenschaft der Hashfunktion ist ein Berechnen des Geheimnis-Vektors SBV aus dem Hashwert h(SBV) nicht möglich. Dieser Hashwert kann als PseudoIdentität PI des Benutzers betrachtet werden, das heißt der Hashwert stellt eine eindeutige Pseudoidentität (PI), aber nicht ein biometrisches Charakteristikum des Benutzers dar.

Der Geheimnis-Vektor SBV wird nun wie folgt mit dem Binärvektor aus dem ersten Prozess, der biometrischen Referenzinformation RBV verknüpft: Ein Encodiing (ENC) des Fehlerkorrekturverfahrens (ECC) wird genutzt, um aus dem Geheimnis-Vektor SBV einen gegen Einzelbitfehler resistenten Vektor CBV zu erzeugen. Einzelbitfehler können in der biometrischen Probe auftreten und durch die Variation in der biometrischen Charakteristik oder durch Veränderung der Umwelteinflüsse (Temperatur, Feuchtigkeit) bei der Erfassung der biometrischen Charakteristik verursacht werden. Die Leistungsfähigkeit des Fehlerkorrekturverfahrens lässt sich leicht variieren. Je mehr Fehler korrigiert werden sollen, desto niedriger ist der Anteil des Geheimnis-Vektors SBV in der Geheiminformation CBV am Ausgang der Fehlerkorrektureinrichtung 21. Der Fehlerkorrekturcode wird in dem bevorzugten Ausführungsbeispiel so gewählt, dass der Geheimnis-Vektor CBV und der Binärvektor RBV (die biometrische Probe) die gleiche Länge haben. Eine XOR-Operation zur Verknüpfung dieser beiden Vektoren sorgt dafür, dass ohne das Wissen eines der beiden Eingaben kein Rückschluss auf die andere Eingabe gemacht werden kann. Dieser entstehende Vektor AD2 (das Referenzdatum) kann ohne besonderen Schutz gegen Auslesen (z. B. Verschlüsselung) in der Datenbank als Referenz hinterlegt werden, da eine korrekte biometrische Probe erforderlich ist, um die Geheiminformation zu extrahieren.

Die in den Figuren dargestellten Ausgestaltungen stellen einen besonderen Fall der Erfindung dar, weil biometrische Merkmale von lediglich einer Person sowohl beim Enrolment als auch bei der späteren Verifikation erfasst werden. Es ist aber möglich, dass zwei oder mehrere Personen eine Datentransaktion authentisieren sollen. In diesem Fall wird das Enrolment bei jeder Person einzeln ausgeführt, und zwar vorzugsweise sequentiell unter Verwendung derselben Datenverarbeitungseinrichtung, die die biometrischen Charakteristika erfasst und für jede Person ein Referenzdatum erzeugt. Alternativ werden die biometrischen Proben der einzelnen Personen lediglich mit einer einzigen Geheiminformation gemeinsam zu einem einzigen Referenzdatum verknüpft. In diesem Fall ist die zugehörige Pseudoidentität eine Identität der Gruppe von Personen. Bei der Verifikation müssen daher (in allen Fällen), unabhängig davon, ob ein oder mehrere Referenzdaten vorliegen, alle Personen erneut für die Erzeugung einer biometrischen Probe zur Verfügung stehen.

Als Hash-Funktion kann sowohl während des Enrolment als auch während der späteren Verifikation, und zwar sowohl in der Datenverarbeitungseinrichtung BTD als auch im Empfänger OBS, z.B. die Hash-Funktion RIPEMD-160 (RACE Integrity Primitives Evaluation Message Digest) eingesetzt werden. Diese Hash-Funktion ist eine kryptografische Hash-Funktion mit einer Ausgabe von 160 Bits. Es können jedoch auch andere Hash-Funktionen eingesetzt werden. Sollen Vergleichswerte von verschiedenen Einrichtungen (insbesondere der Datenverarbeitungseinrichtung und der Empfangseinrichtung) jeweils unter der Verwendung von Hash-Funktionen erzeugt werden oder sollen Werte reproduzierbar sein, d.h. wiederholt mit derselben Hash-Funktion verändert werden, ist darauf zu achten, dass immer dieselbe Hash-Funktion angewendet wird. Dies ist der Fall bei der vorliegenden Erfindung. Es wird daher in der Datenverarbeitungseinrichtung und in der Empfangseinrichtung oder den Empfangseinrichtungen zumindest in Bezug auf die Verarbeitung von Datentransaktionen einer bestimmten Person oder einer bestimmten Personengruppe immer dieselbe Hash-Funktion eingesetzt.

Im Folgenden wird nun eine erste Variante der Erfindung anhand von Fig. 2 beschrieben. In der Figur sind ebenfalls eine Empfangseinrichtung OBS, insbesondere die Empfangseinrichtung OBS aus Fig. 1, sowie eine Datenverarbeitungseinrichtung BTD, insbesondere die Datenverarbeitungseinrichtung BTD aus Fig. 1, dargestellt. In beiden Einrichtungen BTD, OBS sind jedoch zusätzliche Einrichtungen dargestellt. Ferner sind dieselben Einrichtungen sowie Verbindungen zwischen diesen Einrichtungen wie in Fig. 1 dargestellt. Auf die bereits erläuterten Elemente wird nicht nochmals eingegangen, sofern es nicht die Funktion der Einrichtung für die Verifikation betrifft.

Zusätzliche Elemente der Datenverarbeitungseinrichtung BTD sind ein Datenspeicherbereich 22 zur Speicherung der durch die Transaktion zu übertragenden Daten TOR (Transaction Order Record), eine Verbindung dieses Speicherbereichs zu der Einrichtung 27 zur Anwendung einer Hash-Funktion, eine Verknüpfungseinrichtung 28 zur Verknüpfung und Versiegelung der Geheiminformation und der zu übertragenden Daten sowie eine Einrichtung 26 zur Anzeige und Bestätigung der zu übermittelnden Daten durch den Benutzer KND.

In der Empfangseinrichtung OBS sind folgende zusätzliche Elemente dargestellt: eine Einrichtung 53 zum Empfangen der Daten TOR, eine damit verbundene Einrichtung 55 zur Anwendung der Hash-Funktion, eine wiederum damit verbundene Verknüpfungs- und Versiegelungseinrichtung 57, die außerdem mit dem Datenspeicher 51 verbunden ist, eine Vergleichseinrichtung 58, die mit einem Ausgang der Einrichtung 57 verbunden ist, und eine Ausgabeeinrichtung 59, die das Ergebnis des Vergleichs der Vergleichseinrichtung 58 ausgibt. Dabei ist die Vergleichseinrichtung 58 über eine Datenübertragungsverbindung 31 mit dem Ausgang 29 der Datenverarbeitungseinrichtung BTD verbunden. Dieser Ausgang 29 ist wiederum mit einem Ausgang der Verknüpfungs-Versiegelungseinrichtung 28 verbunden. Wenn die Transaktion in der Empfangseinrichtung selbst ausgeführt wird, kann die Ausgabe nach außen entfallen. In diesem Fall empfängt zum Beispiel eine Transaktionseinrichtung der Empfangseinrichtung das Signal der Vergleichseinrichtung 58.

Ferner ist in der Anordnung gemäß Fig. 2 noch eine Benutzereinrichtung BSW, z.B. ein Personal Computer, dargestellt, der mit dem Bezugszeichen 61 bezeichnet ist. Diese Benutzereinrichtung dient der Erzeugung der zu übertragenden Daten und muss nicht als sicher getestet oder zertifiziert sein.

Bei einer Variante der vorliegenden Erfindung kann diese Benutzereinrichtung wegfallen. In diesem Fall muss die Datenverarbeitungseinrichtung BTD selbst eine Eingabevorrichtung zum Eingeben der zu übertragenden Daten aufweisen. In diesem Fall ist darauf zu achten, dass auch die Eingabeeinrichtung sicher vor Manipulationen ist und insbesondere keine Malware auf die Datenverarbeitungseinrichtung BTD gelangen kann. Diese Variante wird deshalb nicht bevorzugt. Bei der in Fig. 2 dargestellten Variante kann sich Malware auf der Benutzereinrichtung 61 befinden.

Solange die zu übertragenden Daten, nachdem sie in die Datenverarbeitungseinrichtung BTD gelangt sind, nochmals von dem Benutzer KND bestätigt werden, kann die Malware keine Manipulation bewirken, oder werden solche Manipulationen zumindest von der Empfangseinrichtung aufgedeckt, wie noch näher beschrieben wird.

Im Folgenden wird die Funktionsweise der in Fig. 2 dargestellten Anordnung beschrieben. Aus dem Enrolment sind in dem Datenspeicher 23 der Datenverarbeitungseinrichtung BTD das Referenzdatum AD2 und die Hilfsdaten AD1 gespeichert. Der Benutzer führt nun zwei Aktionen in sequentieller Reihenfolge oder gleichzeitig aus. Zum einen gibt er die zu übertragenden Daten mit Hilfe der Benutzereinrichtung 61 ein. Diese Daten TOR werden von der Benutzereinrichtung 61 aus der Eingabeeinrichtung 63 zu dem Speicherbereich 22 der Datenverarbeitungseinrichtung BTD übertragen. Bei diesem Speicherbereich 22 kann es sich um einen Bereich des Datenspeichers 23 oder um einen separaten Datenspeicher handeln. Die wesentlichen Elemente des TOR, insbesondere die Receiver-Account-Number (RAN) und der Ordered-Amount (ORA), werden dann auf dem sicheren BTD angezeigt oder alternativ ausgegeben (z. B. akustisch oder ausgedruckt). Abschließend, während und/oder nach Prüfung der ausgegebenen Elemente des TOR, erzeugt der Benutzer KND erneut zumindest eine biometrische Repräsentation, d. h. der Benutzer KND präsentiert dasselbe biometrische Charakteristikum oder dieselben biometrischen Charakteristika wie bei dem Enrolment. Das zumindest eine Charakteristikum wird zumindest einmal über die Sensorschnittstelle 11 von der Erfassungseinrichtung BCD erfasst und wie beim Enrolment durch die Binarisierungseinrichtung 15 binarisiert. Ebenfalls wie beim Enrolment wird optional von der Selektionseinrichtung RBS eine Selektion durchgeführt. Dabei greift die Selektionseinrichtung RBS auf die in dem Datenspeicher 23 gespeicherten ersten Hilfsdaten AD1 zu. Im Ergebnis wird der Verknüpfungseinrichtung 19 wieder eine biometrische Probe XBV zugeführt, die weitgehend mit der biometrischen Referenzinformation beim Enrolment identisch ist, falls es sich um dasselbe biometrische Charakteristikum bzw. dieselben biometrischen Charakteristika wie beim Enrolment handelt. Ferner wird das Referenzdatum AD2 aus dem Speicher 23 der Verknüpfungseinrichtung 19 zugeführt. Diese extrahiert bei Übereinstimmung oder weitgehender Übereinstimmung von biometrischer Probe XBV und biometrischer Referenzinformation RBV aus dem Enrolment und bei der hier durchgeführten Verifikation die Geheiminformation CBV', welche der Fehlerkorrektureinrichtung 21 zugeführt wird. Diese korrigiert etwaige Abweichungen zwischen der extrahierten Geheiminformation CBV' und der ursprünglichen vorbereiteten Geheiminformation CBV. Die Korrektur ist nur dann erfolgreich, wenn die biometrische Referenzinformation RBV und die biometrischen Probe XBV aus Enrolment und Verifikation übereinstimmen oder zumindest weitgehend übereinstimmen, d.h. dieselbe Person dieselben biometrischen Charakteristika oder dasselbe biometrische Charakteristikum präsentiert hat. Daher ist am Ausgang der Korrektureinrichtung 21 in Fig. 2 das Signal mit SBV' bezeichnet. Es kann prinzipiell von dem Signal SBV der ursprünglichen Geheiminformation aus dem Enrolment abweichen. Bei Übereinstimmung der biometrischen Proben ist die Geheiminformation SBV' aus der Verifikation aber identisch mit der ursprünglichen Geheiminformation SBV.

Von der Einrichtung 27 wird auf die Geheiminformation SBV' eine Hash-Funktion angewendet, insbesondere dieselbe Hash-Funktion wie bei dem Enrolment gemäß Fig. 1.

Nachdem die zu übertragenden Daten TOR zu dem Speicherbereich 22 übertragen wurden, werden diese von der Einrichtung 26 so dargestellt, dass der Benutzer KND die Daten überprüfen kann. Durch eine Eingabe des Benutzers kann er die Daten bestätigen. Bei fehlender Eingabe oder wenn der Benutzer eingibt, dass die Daten nicht korrekt sind, werden die Daten nicht weiterverarbeitet und keine Bestätigung zum Empfänger übertragen. Wenn der Benutzer KND dagegen die Daten bestätigt, werden sie vom Speicherbereich 22 ebenfalls der Einrichtung 27 zur Anwendung einer Hash-Funktion übermittelt. In dem Ausführungsbeispiel wendet die Einrichtung 27 die Hash-Funktion separat auf die Geheiminformation SBV' und auf die zu übertragenden Daten TOR an und gibt die resultierenden modifizierten Daten zu der Verknüpfungseinrichtung 28 aus. Diese verknüpft die Daten, nämlich die durch die Hash-Funktion modifizierten zu übertragenden Daten h(TOR) und die Pseudoidentität PI des Benutzers und versiegelt diese verknüpften Daten. Im Ergebnis gibt die Verknüpfungseinrichtung 28 versiegelte Daten TOS' aus, die über den Ausgang 29 der Datenverarbeitungseinrichtung BTD und über die Übertragungsverbindung 31 zu der Vergleichseinrichtung 58 der Empfangseinrichtung OBS übertragen werden.

Außerdem werden über eine separate Datenübertragungsverbindung 71 zwischen der Benutzereinrichtung 61 und der Datenempfangseinrichtung 53 die zu übertragenden Daten TOR übertragen. Die Empfangseinrichtung OBS vollzieht nun die Operationen nach, die die Datenverarbeitungseinrichtung BTD auf die zu übertragenden Daten angewendet hat. Zunächst wird in der Einrichtung 55 die Hash-Funktion auf die empfangenen Daten angewendet. Der resultierende Hashwert h(TOR) wird zu der Verknüpfungseinrichtung 57 zu übertragen, die außerdem aus dem Datenspeicher 51 die Pseudoidentität PI abruft. Nach der Verknüpfung und Anwendung der Siegelfunktion in gleicher Weise wie bei dem Betrieb der Verknüpfungseinrichtung 28 werden versiegelte Daten TOS erzeugt und zu der Vergleichseinrichtung 58 ausgegeben. Stimmen die innerhalb der Empfangseinrichtung erzeugten versiegelten Daten TOS und die über die Übertragungsverbindung 31 von der Einrichtung BTD empfangenden versiegelten Daten TOS' überein, wird dies von der Vergleichseinrichtung festgestellt und von der Einrichtung 59 ausgegeben bzw. angezeigt. Andernfalls zeigt die Einrichtung 59 an, dass die Daten nicht übereinstimmen. In diesem Fall erkennt die Empfangseinrichtung OBS die Transaktion nicht an. Bei Übereinstimmung dagegen ist die Transaktion erfolgreich und wird von der Empfangseinrichtung OBS akzeptiert.

Die Verknüpfungseinrichtung 28 und auch die Verknüpfungseinrichtung 57, die in gleicher Weise betrieben werden sollen, können z.B. ein HMAC-Verfahren (Hash Message Authentication Code) ausführen. Der Code HMAC wird aus der eigentlichen Nachricht, hier den zu übertragenden Daten TOR, und aus einem geheimen Schlüssel, hier der Geheiminformation SBV' bzw. SBV, berechnet. Dabei greift die Verknüpfungseinrichtung zur Umsetzung der Siegelfunktion wie die separate Einrichtung 27 auf die Berechnung von Hashwerten zurück, was in Fig. 2 aber nicht im Detail dargestellt ist. So lassen sich die versiegelten Daten durch ein zu übertragendes Siegeldatum TOS' wie folgt berechnen:

$$\text{TOS‘} = h(\text{PI‘} \; XOR \; \text{OPAD} \; o \; h(\text{PI‘} \; XOR \; \text{IPAD} \; o \; \text{TOR}))$$

Dabei sind OPAD und IPAD statische Initialisierungsvektoren, die durch das HMAC-Verfahren definiert sind. Da das HMAC-Verfahren grundsätzlich, aber nicht in Bezug auf die vorliegende Erfindung, bekannt ist, wird hier nicht näher darauf eingegangen. Ferner bedeutet h(...) die Anwendung der Hash-Funktion auf den Klammerinhalt. Die Operation XOR wurde bereits erläutert. Sie steht für die bitweise XOR-Operation binärer Vektoren. "Kursives o" steht für die Verknüpfung durch einfaches Zusammensetzen, d.h. durch Aneinanderhängen (Konkatenation) der einzelnen Daten. Es ist grundsätzlich - nicht nur bei dem hier beschriebenen Ausführungsbeispiel - auch möglich die im Ausführungsbeispiel von der Einrichtung 27 und von der Verknüpfungseinrichtung 28 ausgeführten Operationen (Bildung von Hashwerten und Versiegeln), gemäß einer Berechnung ähnlich der oben stehenden Gleichung, durch eine einzige Einrichtung ausführen zu lassen.

Zuvor wurde erwähnt, dass die zu übertragenden Daten TOR direkt von der Benutzereinrichtung 61 über eine andere Datenübertragungsverbindung 71 als die versiegelten Daten TOS' übermittelt werden. In der Praxis können diese separaten Datenverbindungen jedoch auch dadurch realisiert werden, dass z.B. die Datenübertragungsverbindung 31 über die Datenübertragungsverbindung 71 "getunnelt" wird. In diesem Fall werden die versiegelten Daten TOS' zusätzlich verschlüsselt, aber unter Verwendung desselben Übertragungsprotokolls und derselben physikalischen Verbindung wie die Daten TOR übertragen. Der Tunnel wird zwischen der Datenverarbeitungseinrichtung und der Empfangseinrichtung OBS aufgebaut (nicht in Fig. 2 dargestellt). Ferner ist es möglich, dass zwar dieselbe physikalische Datenübertragungsverbindung für beide Daten TOR, TOS' genutzt wird, dass aber separate Kanäle verwendet werden. In der Praxis wird vorzugsweise eine VPN-Verbindung für die versiegelten Daten TOS' benutzt. Z. B. kann dazu eine Funkverbindung von der Datenverarbeitungseinrichtung BTD über das öffentliche Mobilfunknetz zu der Empfangseinrichtung OBS benutzt werden. Dagegen kann der Benutzerrechner 61 z. B. über das Internet mit der Empfangseinrichtung OBS verbunden sein.

Unter Bezugnahme auf Fig. 3 wird nun eine Variante des anhand von Fig. 2 erläuterten Verifikationsverfahrens zur Durchführung einer Transaktion beschrieben. Die in Fig. 3 dargestellte Anordnung weist wiederum die Datenverarbeitungseinrichtung BTD, die Benutzereinrichtung 61 und die Empfangseinrichtung OBS auf. Diese drei Einrichtungen weisen jedoch zusätzliche Elemente und zusätzliche interne Verbindungen und Verknüpfungen auf. Es handelt sich um eine Erweiterung des anhand von Fig. 2 erläuterten Verifikationsverfahrens, bei der auch eine Transaktionsnummer TAN zum Einsatz kommt. Die TAN kann in verschiedener Weise generiert werden, insbesondere in jeder an sich bekannten Weise, z.B. mTAN, sm@rt-TAN, eTAN, chipTAN manuell, chipTAN comfort. Bevorzugt wird, dass unter Verwendung der aktuellen Uhrzeit, einer Chipkarte des Benutzers, der Geheiminformation und unter Verwendung zumindest von Teilen der zu übertragenden Daten (z.B. Empfängerkontonummer und/oder bei der Banktransaktion zu überweisende Geldsumme) in der Empfangseinrichtung eine Transaktionsnummer berechnet wird, die von der Datenverarbeitungseinrichtung BTD dem Benutzer KND angezeigt wird und von diesem in die Benutzereinrichtung 61 eingegeben wird. Alternativ kann die von der Datenverarbeitungseinrichtung BTD erzeugte TAN über eine Schnittstelle automatisch zu der Benutzereinrichtung 61 übertragen werden, z.B. über eine optische Schnittstelle.

Die zusätzlichen Elemente in der Einrichtung BTD sind folgende: ein Kartenleser, eine Einrichtung 83, die mit dem Kartenleser 81 sowie mit der Einrichtung zur Anwendung einer Hash-Funktion 27 verbunden ist, eine TAN-Anzeigevorrichtung 88, die die von der Einrichtung 83 ermittelte TAN für den Benutzer KND anzeigt. Die spezielle hier dargestellte Ausführungsform weist ferner noch einen Eingang 82 für einen Zeitfenster-Identifikator TIM. Dieser Eingang ist mit der Einrichtung 27 zur Anwendung der Hash-Funktion verbunden. Ein solcher Zeitfenster-Identifikator kann jedoch auch entfallen. In dem Ausführungsbeispiel berechnet die Einrichtung 27 aus dem TIM und aus der von der Einrichtung 21 empfangenen Geheiminformation sowie zumindest aus einem Teil der zu übertragenden Daten TOR einen Transaktions-Hashwert HTR, wobei die folgenden Werte bei der bevorzugten Ausführungsform konkateniert werden: der angewiesene Geldbetrag (im Fall einer Bank-Transaktion, andernfalls ein entsprechender ausgezeichneter Wert der Datenübertragung), die Kontonummer des Empfängers (oder im Fall einer anderen Transaktion eine zweite ausgezeichnete Zahl) sowie der Zeitfenster-Identifikator TIM. Mit dem Zeitfenster-Identifikator TIM, der auch der Empfangseinrichtung OBS bekannt sein muss, wird die Transaktionsnummer TAN abhängig von dem gegenwärtigen Zeitpunkt bzw. von einem Zeitfenster erzeugt, in dem der gegenwärtige Zeitpunkt liegt. Z. B. kann, falls die Transaktion zu viel Zeit in Anspruch nimmt, die Empfangseinrichtung bereits wieder einen anderen aktuellen Zeitfenster-Identifikator vorliegen haben, so dass die Transaktionsnummer nicht mehr akzeptiert wird. Die Wiederholung von bereits durchgeführten Transkationen (in der Regel mit geänderten Daten) durch einen so genannten Replay-Angriff wird unter Verwendung des Zeitfenster-Identifikators erschwert. Der Zeitfenster-Identifikator ist jedoch keine zwingende Voraussetzung für die Bildung einer TAN zur Verwendung mit dem hier vorgestellten Verfahren.

Der Transaktions-Hashwert HTR wird in dem speziellen Ausführungsbeispiel nun mit dem von dem Chipkartenleser eingelesenen Wert, der auf der eingesteckten oder angeschlossenen Chipkarte gespeichert ist, digital signiert. Dieser digital signierte Transaktions-Hashwert kann als Transaktionsnummer genutzt werden. Die Transaktionsnummer wird dem Benutzer KND auf der Anzeigevorrichtung 88 angezeigt. Der Benutzer KND gibt daraufhin die angezeigte Transaktionsnummer in seine Benutzereinrichtung BSW ein.

Wiederum, wie auch bei der in Zusammenhang mit Fig. 2 beschriebenen Kommunikation zwischen der Benutzereinrichtung BSW und der Datenverarbeitungseinrichtung BTD zur Übermittlung der zu übertragenden Daten TOR können auch andere Wege zur Übertragung der TAN von der Datenverarbeitungseinrichtung zu der Benutzereinrichtung gewählt werden. Z.B. kann eine optische Übertragung über eine Anzeige der Datenverarbeitungseinrichtung und eine entsprechende Kamera der Benutzereinrichtung realisiert werden.

Diese Einrichtung 61 überträgt außer den eigentlich zu übertragenden Daten TOR auch die Transaktionsnummer zu der Empfangseinrichtung. Dort wird die Transaktionsnummer von der Empfangseinrichtung 72 empfangen und zum Vergleich vorbereitet. Um die Transaktionsnummer zu überprüfen, steht auch der Empfangseinrichtung OBS der Zeitfenster-Identifikator TIM zur Verfügung, und zwar der Einrichtung 55 zur Berechnung eines Hashwertes aus den empfangenen Daten TOR. Die Einrichtung 55 wendet die Hash-Funktion in gleicher Weise wie die Einrichtung 27 der Datenverarbeitungseinrichtung BTD auf den Zeitfenster-Identifikator sowie die Teile der empfangenen Daten an, im Ausführungsbeispiel den angewiesenen Betrag und die Kontonummer des Empfängers, und gibt den entsprechenden Hashwert an die Vergleichseinrichtung 75 aus. Ferner ist in dem Speicher 51 der zu der Signatur der Chipkarte, die von dem Chipkartenleser 81 zu der Einrichtung 83 übertragen wurde, der zugehörige öffentliche Schlüssel abgespeichert. Dieser wird einer Einrichtung 73 zugeführt, der außerdem von der Empfangseinrichtung 72 die TAN zugeführt wird. Diese Einrichtung 73 überprüft mit Hilfe des öffentlichen Schlüssels die Signatur des Kunden. Zudem prüft die Einrichtung 73 auch optional, ob die von dem Kunden in den Kartenleser 81 eingeführte Chipkarte gültig ist, insbesondere ob sie in eine Liste widerrufener Karen eingetragen ist. Ferner identifiziert die Einrichtung 73 die Transaktionsnummer und führt sie der zweiten Vergleichseinrichtung 75 zu. Diese führt den Vergleich zwischen dem von der Einrichtung empfangenen Hashwert und der Transaktionsnummer durch. Bei Übereinstimmung gibt sie ein Bestätigungssignal aus, das bestätigt, dass die Transaktion zumindest bezüglich der Transaktionsnummer gültig ist. Andernfalls gibt sie ein Signal aus, das die Ungültigkeit der Transaktion bedeutet. Das jeweilige Signal wird an die Verknüpfungseinrichtung 77 ausgegeben, welche außerdem das Ergebnissignal des Vergleichs der Vergleichseinrichtung 58 empfängt. Die Vergleichseinrichtung 58 sowie die anderen Teile der Empfangseinrichtung OBS führen die anhand von Fig. 2 beschriebenen Funktionen aus. Die Verknüpfungseinrichtung 77 verknüpft die Ausgangssignale der Vergleichseinrichtungen 58, 75 mit einer "und"-Operation. Nur in dem Fall, dass beide Signale die Gültigkeit der Transaktion bestätigen, gibt die Verknüpfungseinrichtung 57 ein Gültigkeitssignal zur Bestätigung der Gültigkeit der Transaktion aus. Andernfalls gibt sie ein Signal aus, das die Ungültigkeit der Transaktion bestätigt. Das Ergebnis wird von der Anzeige- oder Ausgabeeinrichtung 59 angezeigt oder ausgegeben.

Die Funktionsweise der Generierung und der Verifikation der Transaktionsnummer wurde lediglich an einem Ausführungsbeispiel beschrieben. Grundsätzlich, nicht nur bezogen auf diese spezielle Ausführungsform, liegt der Verwendung der Transaktionsnummer der Gedanke zugrunde, dass die Transaktionsnummer unter Verwendung zumindest eines Teils der zu übertragenden Daten TOR und/oder unter Verwendung der Geheiminformation erzeugt wird. Dabei wird vorzugsweise auf diese Informationen eine Hash-Funktion angewendet, so dass der resultierende Hashwert aufgrund der Einwegeigenschaft nicht auf die Eingangsdaten der Hash-Funktion zurückgerechnet werden kann. Dieselben Operationen kann auch die Empfangseinrichtung ausführen und somit die Gültigkeit der Transaktionsnummer überprüfen. Da die Arbeitsweise der Datenverarbeitungseinrichtung und der Empfangseinrichtung koordiniert ist, indem ein Signatur-Schlüsselpaar verwendet wird,,ist die Transaktionsnummer in besonderer Weise gesichert. Insbesondere kann ein physikalischer Token (z. B. Maestro-Card des Benutzers) zur Erzeugung der TAN eingesetzt werden, der nur der Person und nicht einem Angreifer zur Verfügung steht. In diesem Fall kann ohne den korrekten Schlüssel auf dem Token nicht die korrekte Transaktionsnummer erzeugt werden. Somit kann nur der Besitzer der Karte die korrekte Transaktionsnummer erzeugen, die zusätzlich zur biometrischen Probe die zu übertragenden Daten bestätigen und authentisieren soll.

Wenn bei dem Enrolment nicht nur eine Person ein biometrisches Charakteristikum präsentiert hat und daraus eine biometrische Probe gewonnen wurde, die wiederum mit der Geheiminformation verknüpft wurde und gespeichert wurde, muss auch bei der Verifikation die entsprechende Gruppe von mindestens zwei Personen das jeweilige Charakteristikum präsentieren und es müssen daraus biometrische Proben gewonnen werden. Andernfalls kann die korrekte Geheiminformation nicht rekonstruiert werden. Sobald die korrekte Geheiminformation rekonstruiert ist, kann das Verfahren der bestätigten und authentisierten Datenübertragung in gleicher Weise ausgeführt werden wie bei einer Person.

Ferner kann die Transaktion nicht nur zu einer Empfangseinrichtung, sondern zu mehreren Empfangseinrichtungen übertragen werden. Dabei ist es auch denkbar, dass die zu übertragenden Daten an eine erste Empfangseinrichtung übertragen werden und die versiegelten und einer Hash-Funktion unterzogenen Transaktionsdaten einer zweiten Empfangseinrichtung zugeführt werden. Die beiden Empfangseinrichtungen können dann Verbindung miteinander aufnehmen, um die beschriebene Verifikation auszuführen. Denkbar ist auch, dass mehrere berechtigte Personen unabhängig von einander und an verschiedenen Orten jeweils Zugriff auf eine Datenverarbeitungseinrichtung haben und eine Bestätigung derselben Transaktionsdaten vornehmen. Entweder werden die Transaktionsdaten an die Datenverarbeitungseinrichtungen verteilt oder zwischen diesen koordiniert, oder jeder Benutzer erzeugt die Daten selbst an seiner eigenen Datenverarbeitungseinrichtung. Die Empfangseinrichtung führt die Transaktion aber erst dann durch, wenn von allen beteiligten Personen die versiegelten und authentisierten Daten in der Empfangseinrichtung eingetroffen sind.

Wenn im allgemeinen Teil der Beschreibung von Daten die Rede ist, die von einer Person bestätigt sind, so schließt dies auch den Fall ein, dass die Person die entsprechenden Eingaben direkt an der sicheren Datenverarbeitungseinrichtung ausführt. Auch durch die Eingabe durch die berechtigte Person sind die Daten betätigt. Z. B. kann es erforderlich sein, dass das biometrische Charakteristikum dieser berechtigten Person andauernd der Datenverarbeitungseinrichtung präsentiert wird und diese wiederholt biometrische Proben zur Überprüfung anfertigt, während die Person die Daten eingibt.

Im allgemeinen Teil der Beschreibung und in der Figurenbeschreibung wurde wiederholt auf das Anwendungsbeispiel der Übertragung einer Banktransaktion, d.h. einer Geld-Überweisung, Bezug genommen. Die Erfindung ist jedoch auch für andere Datentransaktionen geeignet, die eine sichere, bestätigte und authentisierte Datenübertragung erfordern. Z. B. ist dies bei Online-Auktionen der Fall.

Abwandlungen des zuvor beschriebenen Verfahrens und der zuvor beschriebenen Anordnung sind möglich. Z. B. kann die separate Benutzereinrichtung BSW entfallen, wenn die Datenverarbeitungseinrichtung BTD gegen Manipulationen sicher ist und außerdem erlaubt, die Transaktionsdaten einzugeben. In diesem Fall handelt es sich z. B. um eine für die spezielle Transaktionsart allein ausgestaltete Vorrichtung. Es kann daher z. B. keine zusätzliche Anwendersoftware installiert werden, und das Risiko einer Manipulation wird verringert oder ausgeschlossen.

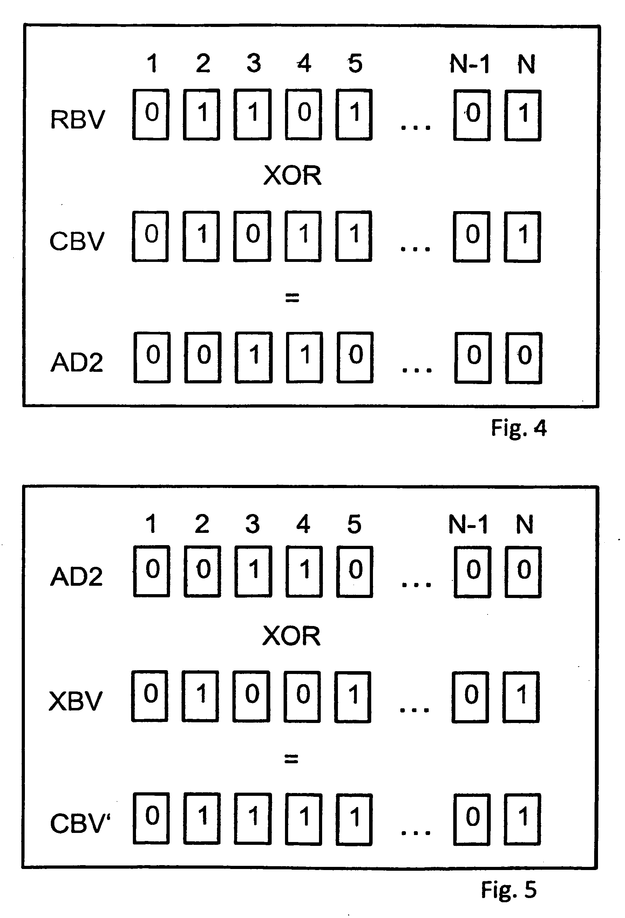

Figur 4 zeigt die Verknüpfung zweier binärer Vektoren. Dabei sind die einzelnen Bits der binären Vektoren RBV, CBV und AD2 in Zeilen nebeneinander und die Vektoren untereinander angeordnet. Jeder der Vektoren hat N Bits, wobei N eine positive ganze Zahl ist. Die möglichen Bitwerte "0" und "1" sind jeweils in einem rechteckigen Kasten dargestellt. Bei dem oben in Figur 4 dargestellten binären Vektor RBV handelt es sich um die biometrische Referenz, die während des Enrolment aus einem biometrischen Charakteristikum einer Person erzeugt wurde. Bei dem binären Vektor CBV in der Mitte von Figur 4 handelt es sich um den einer umgekehrten Fehlerkorrektur unterzogenen binären Vektor der Geheiminformation. Die einander entsprechenden, an denselben Positionen stehenden Bits der Vektoren RBV, CBV werden mit der XOR-Operation zu dem Ergebnisvektor AD2 verknüpft. Man erkennt in dem Ausführungsbeispiel, dass lediglich die Bits an den Positionen 3 und 4 verschieden waren. An diesen Positionen steht in dem Ergebnisvektor AD2 eine "1". An allen anderen Positionen steht eine "0". Bei dem Ergebnisvektor AD2 handelt es sich um das Referenzdatum.

Um die Geheiminformation wieder zu extrahieren wird zur Vorbereitung der Transaktion die biometrische Probe XBV als binärer Vektor gewonnen (Figur 5). Der binäre Vektor XBV wird mit dem binären Vektor des Referenzdatums in einer XOR-Operation verknüpft. Als Ergebnis erhält man den Vektor CBV', der lediglich an den Bitpositionen von dem binären Vektor CBV aus Figur 4 abweicht, in denen der biometrische Probenvektor XPV von dem biometrischen Referenzinformation (Referenzvektor RBV) abweicht. Im Ausführungsbeispiel besteht lediglich eine Abweichung an der dritten Bitposition. Daher unterscheidet sich der Vektor CBV' an der dritten Bitposition mit dem Bitwert "1" von dem Bitwert "0" an der dritten Bitposition des Vektors CBV.

Diese Abweichung zwischen den Vektoren CBV, CBV' beruht auf der erwähnten unterschiedlichen Erfassung desselben biometrischen Charakteristikum und wird in der folgenden Fehlerkorrektur korrigiert.

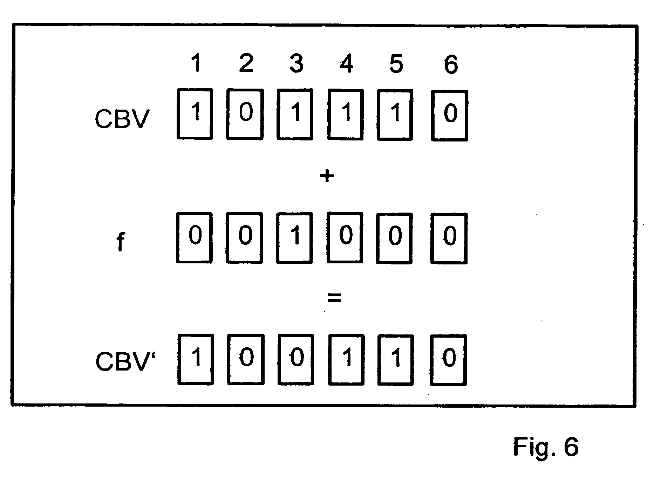

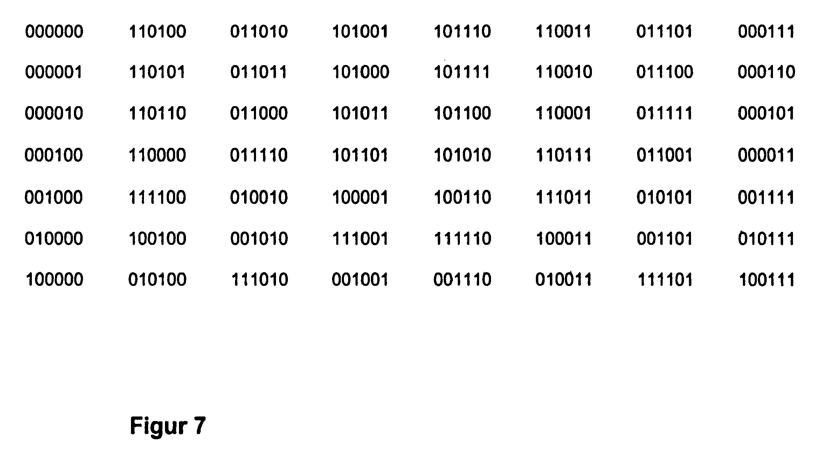

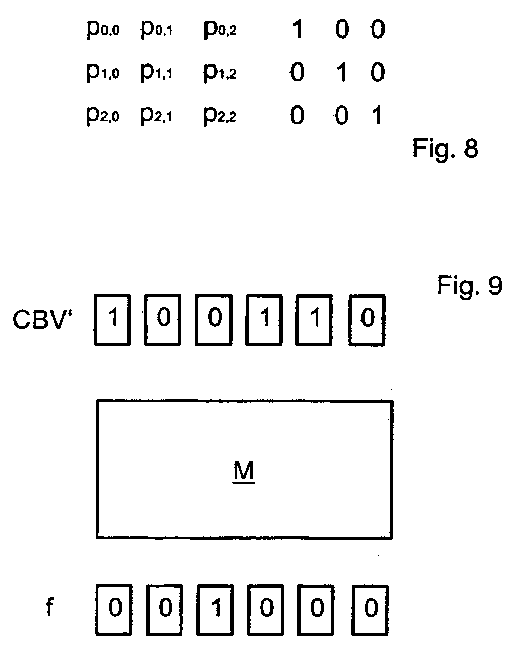

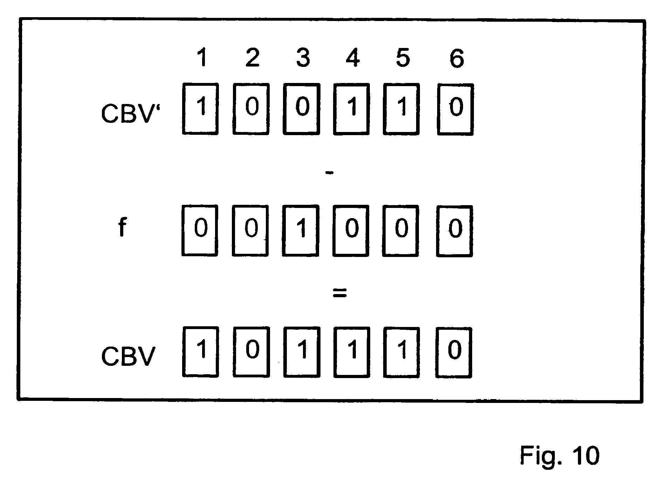

In den Figuren 6 - 10 wird ein Ausführungsbeispiel für ein Fehlerkorrekturverfahren beschrieben. Das Beispiel betrifft einen einfachen linearen Block-Code, der in diesem speziellen Beispiel einer 6-elementigen Bitfolge lediglich einen Bitfehler detektieren und korrigieren kann. Die Fig. 6 zeigt die beim Enrolment aufbereitete Geheiminformation CBV. Bei der Authentisierung konnte wegen der Variation der biometrischen Charakteristik die Geheiminformation jedoch nur mit einem fehler (an der dritten Position in der Bit-Folge) rekonstruiert werden. Die aus Referenzdatum und biometrischer Probe rekonstruierte aufbereitete Geheiminformation CBV' ist an dieser dritten Position falsch. Bei systematischen linearen Block-Codes (n,k) gibt n die Anzahl der Spalten, d.h. die Länge der Binärvekotren und k die Zeilen in der Generator-Matrix angeben - siehe Fig. 7. Bei systematischen Blockcode wird der Nachrichtenteil unverändert in die Codeworte aufgenommen und durch Kontrollstellen ergänzt (Parity-Block). Alle Vektoren der Kontrollmatrix (parity check matrix) - nicht dargestellt sind zur Generatormatrx orthogonal. Es kann nun eine Standard-Matrix konstruiert werden, wie sie in Fig. 8 gezeigt wird. Diese Matrix wird zum Decoding (DEC) in der Fehlerkorrekturverarbeitungseinheit benutzt. Wenn bei der biometrischen Transaktion ein mit einem Bitfehler behafteter CBV' rekonstruiert wird, so findet sich der in Fig. 9 gezeigte fehlerhafte Binärvektor in Zeile 5 und Spalte 5 der Standard-Matrix in Fig. 8. Aus Spalte 1 in der gleichen Zeile der Standard-Matrix ergibt sich der zugehörige Fehlervektor, der benutzt werden muss, um CBV' wieder in CBV zu überführen - siehe Fig. 10.

Im Folgenden wird die Fehlerkorrektur anhand der Figuren 6 bis 10 detaillierter beschrieben. Dieses Fehlerkorrekturverfahren wird z. B. von der Dekodierungseinrichtung 21 in Figur 2 oder 3 ausgeführt. Der Einfachheit halber wird das Fehlerkorrekturverfahren am Beispiel eines Binärvektors mit lediglich 6 Bits erläutert. Es ist jedoch für Binärvektoren beliebiger Länge geeignet. Mit der Länge der Binärvektoren ändert sich lediglich die Größe der im Folgenden geschriebenen Matrizen.

Figur 6 zeigt den Binärvektor CBV, der während des Enrolment z. B. von der Kodierungseinrichtung 21 in Figur 1 erzeugt wurde und der Verknüpfungseinrichtung 19 in Figur 1 zugeführt wurde. Unten in Figur 6 ist der aus dem Referenzdatum AD2 von der Verknüpfungseinrichtung 19 extrahierte Binärvektor CBV' (siehe z. B. Figur 2 und Figur 3) dargestellt. Wie auch in dem Ausführungsbeispiel der Figuren 4 und 5 unterscheiden sich die beiden Vektoren CBV, CBV' lediglich in einer Bitposition, nämlich der dritten Bitposition. Während der Vektor CBV an dieser Bitposition den Wert "1" annimmt, beträgt der Wert des Vektors CBV' an dieser Position "0". Figur 6 zeigt, dass dementsprechend durch Addition eines Fehlervektors f, der dieselbe Länge hat wie die beiden Vektoren CBV, CBV', der Vektor CBV' durch bitweise Addition erhalten wird. Das im Folgenden beschriebene Ausführungsbeispiel ist der Einfachheit halber nicht nur auf die Länge 6 der Binärvektoren beschränkt, sondern auch auf den Fall, dass lediglich die Korrektur eines einzigen Bits stattfindet. Weichen die Vektoren CBV, CBV' an mehr als einer Bitposition voneinander ab, führt die Fehlerkorrektur nicht dazu, dass die ursprüngliche Geheiminformation wieder erhalten wird. Bei dem hier vorgestellten Ausführungsbeispiel des Fehlerkorrekturverfahrens liegt dies daran, dass das Verfahren lediglich über die Informationen zur Korrektur einer einzelnen Bitposition verfügt. Es ist jedoch auch möglich, die Information zur Korrektur von mehr als einer Bitposition, z. B. von zwei, drei oder mehreren Bitpositionen zur Verfügung zu stellen, sodass auch Abweichungen zwischen den Vektoren CBV, CBV' in mehr als einer Bitposition möglich ist. Unabhängig von dem hier beschriebenen Ausführungsbeispiel wird es bevorzugt, dass die Anzahl der Bitpositionen, in denen die Vektoren CBV, CBV' voneinander abweichen dürfen, damit die ursprüngliche Geheiminformation durch das Fehlerkorrekturverfahren wieder aus dem Vektor CBV' erzeugt werden kann, vorgegeben ist.

Figur 7 zeigt eine Tabelle, die sieben Spalten hat. Die Anzahl von sieben Spalten ergibt sich aus der Länge von sechs Bits, die die Vektoren CBV, CBV' haben. Die Tabelle in Figur 7 hat eine Spalte mehr als die Bitlänge der Vektoren. In der ersten Spalte befinden sich die Fehlervektoren f, die überhaupt möglich sind bei der vorgegebenen maximalen Anzahl von Bitpositionen, in denen die Vektoren CBV, CBV' voneinander abweichen können. Wären Fehler in mehr als einer Bitposition zulässig, würde die Spalte 1 entsprechend länger sein. In dem hier vorgestellten Ausführungsbeispiel ergeben sich daher sieben Zeilen, da auch der Fehlervektor f vorkommen kann, bei dem es keine Abweichungen zwischen den Vektoren CBV, CBV' gibt und daher alle Bits des Fehlervektors "0" sind.

In den Zeilen rechts neben den Fehlervektoren f in Figur 7 befinden sich die möglichen extrahierten Vektoren CBV', die beispielsweise das Ergebnis der Verknüpfung der Verknüpfungseinrichtung 19 in Figur 2 oder 3 sind. In Figur 9 ist schematisch dargestellt, wie eine Einheit M aus dem extrahierten Vektor CBV' unter Nutzung der Tabelle in Figur 7 den Fehlervektor f erzeugt. In dem hier dargestellten Fall identifiziert die Einheit M der Fehlerkorrektureinrichtung 21 aus der Tabelle in Figur 7, dass sich der Vektor CBV' an der Position der fünften Spalte und fünften Zeile in der Tabelle in Figur 7 befindet. Daraus ermittelt die Einheit M, dass sich in der ersten Spalte der fünften Zeile der zugehörige Fehlervektor f befindet, der an der dritten Bitposition eine "1" und ansonsten eine "0" aufweist.

Nun ermittelt die Fehlerkorrektureinrichtung durch Subtraktion des Fehlervektors f, der von der Einheit M identifiziert wurde, von dem extrahierten Vektor CBV' die ursprüngliche Geheiminformation, nämlich den Vektor CBV (Figur 10).

Die entsprechende Kodierungseinrichtung 21, z. B. die Einrichtung 21 in Figur 1, die die Fehlerkorrektur während des Enrolment vorbereitet, erzeugt aus der ursprünglichen Geheiminformation, hier z. B. der Vektor CBV unten in Figur 10, die Tabelle in Figur 7. Hierzu verwendet die Einrichtung 21 die zusätzliche Information, in wie vielen Bitpositionen der später extrahierte Vektor CBV' von dem Vektor CBV abweichen darf. Aus dieser Information und der Geheiminformation erzeugt die Kodierungseinrichtung 21 die Tabelle indem sie in Spalte 1 die zulässigen Fehlervektoren auflistet und jeweils rechts davon die daraus resultierenden möglichen extrahierten Vektoren CBV', die noch zulässig sind.

**Patentansprüche**

1. Verfahren zum Übertragen von Daten, die von zumindest einer Person (KND) bestätigt sind, wobei das Verfahren folgende Schritte aufweist:

- die zu übertragenden Daten (TOR) werden von einer Eingabevorrichtung (BSW) empfangen und/oder erzeugt, wobei die Eingabevorrichtung (BSW) von der Person (KND) bedienbar ist,
- die Daten werden von der Eingabevorrichtung (BSW) zu einer Datenverarbeitungseinrichtung (BTD) zur Aufbereitung der Daten (TOR) für eine authentisierte Datenübertragung übermittelt,
- zum Zweck einer Authentisierung durch die Person (KND) wird von der Datenverarbeitungseinrichtung (BTD) zumindest ein biometrisches Charakteristikum der Person (KND) erfasst, um daraus zumindest eine Repräsentation des Charakteristikum der Person (KND) zu ermitteln und daraus eine Merkmalsinformation als biometrische Probe (XBV) zu erzeugen,

**gekennzeichnet durch** folgende Schritte:

- von der Datenverarbeitungseinrichtung (BTD) wird ein darin gespeichertes Referenzdatum (AD2) abgerufen, wobei das Referenzdatum (AD2) eine biometrische Referenzinformation (RBV) aufweist, die mit einer Geheiminformation (CBV) verknüpft wurde, wobei die biometrische Referenzinformation (RBV) aus zumindest einem biometrischen Charakteristikum der Person (KND) abgeleitet wurde, die die authentisierte Datenübertragung bestätigen soll,
- die Datenverarbeitungseinrichtung (BTD) verknüpft die biometrische Probe (XBV) und das Referenzdatum (AD2) derart, dass bei Übereinstimmung der biometrischen Referenzinformation (RBV) mit der biometrischen Probe (XBV), die Geheiminformation (CBV') aus dem Referenzdatum (AD2) extrahiert wird,
- die extrahierte Geheiminformation (CBV') wird einer fehlerkorrektur (ECC) unterzogen, um Abweichungen aufgrund auf unterschiedliche Weise erfasster biometrischer Charakteristika und daher entstandenen Abweichungen zwischen biometrischer Probe und biometrischer Referenzinformation zu korrigieren,
- die zu übertragenden Daten (TOR) und die korrigierte Geheiminformation (SBV') werden von der Datenverarbeitungseinrichtung (BTD) unter Verwendung einer Hash-Funktion kodiert und unter Verwendung einer Siegelfunktion miteinander verknüpft, so dass authentisierte, gemäß der Siegelfunktion versiegelte Daten (TOS') gebildet werden, und
- die authentisierten Daten (TOS') werden zur Übertragung ausgegeben.

2. Verfahren nach Anspruch 1, wobei die von der Person (KND) bestätigten, ausgegebenen authentisierten Daten (TOS') zu einer Empfangseinrichtung (OBS) übertragen werden, wobei die Empfangseinrichtung (OBS) über die mit der Hash-Funktion kodierte Geheiminformation (PI) verfügt, wobei die Empfangseinrichtung (OBS) die nicht authentisierten Daten (TOR) über einen parallelen Weg (71) empfängt, die nicht authentisierten Daten (TOR) unter Verwendung der Hash-Funktion kodiert und mit der bereits unter Verwendung der Hash-Funktion kodierten Geheiminformation (h(SBV)) verknüpft, um so Vergleichsdaten zu erhalten, und wobei die Empfangseinrichtung die Vergleichsdaten mit den empfangenen authentisierten Daten (TOS') vergleicht und überprüft, ob die Daten übereinstimmen.

3. Verfahren nach Anspruch 1 oder 2, wobei von der Datenverarbeitungseinrichtung (BTD) unter Verwendung der Geheiminformation (SBV') und/oder unter Verwendung zumindest eines Teils der zu übertragenden Daten (TOR) eine Transaktionsnummer (TAN) erzeugt wird und die Transaktionsnummer (TAN) zur Sicherung einer Übertragung der authentisierten Daten (TOS') ausgegeben wird.

4. Verfahren nach Anspruch 3, wobei auf den Teil der zu übertragenden Daten (TOS') und/oder auf die Geheiminformation (SBV') zunächst die Hash-Funktion angewendet wird und die so modifizierten zu übertragenden Daten zur Erzeugung einer Transaktionsnummer (TAN) verwendet werden.

5. Verfahren nach einem der Ansprüche 1 - 4, wobei zur Erzeugung des Referenzdatums (AD2) von der Datenverarbeitungseindchtung (BTD) die Geheiminformation (SBV) einer Operation unterzogen wird, die der umgekehrten Fehlerkorrektur gemäß Anspruch 1 entspricht, wobei die Datenverarbeitungseinrichtung (BTD) auf Basis von zumindest einem biometrischen Charakteristikum der Person (KND), die später Datenübertragungen bestätigen soll, eine biometrische Referenzinformation erzeugt, und die biometrische Referenz (RBV) und die der umgekehrten Fehlerkorrektur unterzogene Geheiminformation (SBV) miteinander verknüpft, so dass das Referenzdatum (AD2) gebildet wird, und das Referenzdatum (AD2) in einem Speicher (23) der Datenverarbeitungseinrichtung (BTD) gespeichert wird.

6. Anordnung zum Übertragen von Daten, die von zumindest einer Person (KND) bestätigt sind, wobei die Anordnung Folgendes aufweist:

- eine Datenverarbeitungseinrichtung (BTD) zur Aufbereitung der Daten für eine Übertragung authentisierter Daten (TOS'),
- eine Eingabevorrichtung (BSW), die mit der Datenverarbeitungseinrichtung (BTD) verbunden ist, wobei die Eingabevorrichtung (BTD) von der Person (KND) bedienbar ist, um die zu übertragenden Daten (TOR) zu empfangen und/oder zu erzeugen,
- wobei die Datenverarbeitungseinrichtung (BTD) zum Zweck einer Authentisierung durch die Person (KND) eine Erfassungseinrichtung aufweist, die ausgestaltet ist, zumindest ein biometrisches Charakteristikum der Person (KND) zu erfassen, um daraus zumindest eine Repräsentation des Charakteristiums der Person (KND) zu ermitteln und daraus eine Merkmalsinformation als biometrische Probe (XBV) oder als biometrische Referenzinformation (RBV) zu erzeugen,

**dadurch gekennzeichnet, dass**

- die Datenverarbeitungseinrichtung (BTD) einen Datenspeicher aufweist, in dem ein Referenzdatum (AD2) gespeichert ist, wobei das Referenzdatum (AD2) eine biometrische Referenzinformation (RBV) aufweist, die mit einer Geheiminformation (CBV) verknüpft wurde, wobei die biometrische Referenzinformation (RBV) aus zumindest einem biometrischen Charakteristikum der Person (KND) abgeleitet wurde, die die authentisierte Datenübertragung bestätigen soll, und wobei die Datenverarbeitungseinrichtung (BTD) ausgestaltet ist, das Referenzdatum (AD2) aus dem Datenspeicher abzurufen,
- die Datenverarbeitungseinrichtung (BTD) eine Verknüpfungseinrichtung aufweist, die ausgestaltet ist, die biometrische Probe (XBV) und das Referenzdatum (AD2) derart zu verknüpfen, dass bei Übereinstimmung der biometrischen Referenzinformation mit der biometrischen Probe, die Geheiminformation (CBV') aus dem Referenzdatum (AD2) extrahiert wird,
- die Datenverarbeitungseinrichtung (BTD) eine Fehlerkorrektureinrichtung aufweist, die ausgestaltet ist, die extrahierte Geheiminformation (CBV') einer Fehlerkorrektur (ECC) zu unterziehen, um Abweichungen aufgrund auf unterschiedliche Weise erfasster biometrischer Charakteristika und daher entstandenen Abweichungen zwischen biometrischer Probe (XBV) und biometrischer Referenzinformation zu korrigieren,
- die Datenverarbeitungseinrichtung (BTD) ausgestaltet ist, die zu übertragenden Daten (TOR) von der Eingabevorrichtung (BSW) zu empfangen, die zu übertragenden Daten (TOR) und die korrigierte Geheiminformation CBV') unter Verwendung einer Hash-Funktion zu kodieren und unter Verwendung einer Siegelfunktion miteinander zu verknüpften, so dass authentisierte, gemäß der Siegelfunktion versiegelte Daten gebildet werden, und die authentisierten Daten (TOS') zur Übertragung auszugeben.

7.  Anordnung nach Anspruch 6, wobei die Datenverarbeitungseinrichtung (BTD) ausgestaltet ist, zur Erzeugung des Referenzdatums (AD2) die Geheiminformation (SBV) einer Operation zu unterziehen, die der umgekehrten Fehlerkorrektur gemäß Anspruch 6 entspricht, wobei die Datenverarbeitungseinrichtung BTD) ausgestaltet ist, auf Basis von zumindest einer biometrischen-Charakteristik der Person (KND), die später Datenübertragungen bestätigen soll, eine biometrische Referenz (RBV) zu erzeugen und die biometrische Referenz und die der umgekehrten Fehlerkorrektur unterzogene Geheiminformation (CBV) miteinander zu verknüpfen, so dass das Referenzdatum (AD2) gebildet wird, und das Referenzdatum in einem Speicher (23) der Datenverarbeitungseinrichtung (BTD) gespeichert wird.

8.  System, aufweisend die Anordnung nach Anspruch 6 oder 7 und eine Empfangseinrichtung (OBS), wobei die Empfangseinrichtung mit der Eingabevorrichtung (BSW) und der Datenverarbeitungseinrichtung (BTD) verbunden ist, wobei die Empfangseinrichtung einen Datenspeicher (51) aufweist, in dem die mit der Hash-Funktion kodierte Geheiminformation (PI) gespeichert ist, wobei die Empfangseinrichtung (OBS) ausgestaltet ist, die nicht authentisierten Daten über einen parallelen Weg (71) zu empfangen, die nicht authentisierten Daten (TOR) unter Verwendung der Hash-funklion zu kodieren und mit der bereits unter Verwendung der Hash-Funktion kodierten Geheiminformation zu verknüpfen, um so Vergleichsdaten zu erhalten, und wobei die Empfangseinrichtung (OBS) ausgestaltet ist, die Vergleichsdaten mit den empfangenen authentisierten Daten (TOS') zu vergleichen und zu überprüfen, ob die Daten übereinstimmen.

9.  Computerprogramm, ausgestaltet zur Ausführung der Verfahrensschritte nach Anspruch 1, wenn das Computerprogramm in einen Arbeitsspeicher der Datenverarbeitungseinrichtung (BTD) geladen ist, wobei das Computerprogramm die Datenverarbeitungseinrichtung folgendermaßen steuert:

- zum Zweck einer Authentisierung durch die Person (KND) von der Datenverarbeitungseinrichtung (BTD) wird zumindest ein biometrisches Charakteristikum der Person (KND) erfasst und wird daraus zumindest eine Repräsentation des Charakteristikums der Person ermittelt und wiederum daraus eine Merkmalsinformation als biometrische Probe (XBV) erzeugt, **gekennzeichnet durch** folgende Schritte:

- von der Datenverarbeitungseinrichtung (BTD) wird ein darin gespeichertes Referenzdatum (AD2) abgerufen, wobei das Referenzdatum eine biometrische Referenzinformation (RBV) aufweist, die mit einer Geheiminformation (CBV) verknüpft wurde, wobei die biometrische Referenzinformation aus zumindest einem biometrischen Charakteristikum der Person abgeleitet wurde, die die authentisierte Datenübertragung bestätigen soll,

- die Datenverarbeitungseinrichtung (BTD) verknüpft die biometrische Probe (XBV) und das Referenzdatum (AD2) derart, dass bei Übereinstimmung der biometrischen Referenzinformation mit der biometrischen Probe, die Geheiminformation (CBV') aus dem Referenzdatum extrahiert wird,

- die extrahierte Geheiminformation (CBV') wird einer Fehlerkorrektur unterzogen, um Abweichungen aufgrund auf unterschiedliche Weise erfasster biometrischer Charakteristika und daher entstandenen Abweichungen zwischen biometrischer Probe (XBV) und biometrischer Referenzinformation (RBV) zu korrigieren,

- die zu übertragenden Daten (TOR) und die korrigierte Geheiminformation (SBV') werden von der Datenverarbeitungseinrichtung (BTD) unter Verwendung einer Hash-Funktion kodiert und unter Verwendung einer Siegelfunktion miteinander verknüpft, so dass authentisierte, gemäß der Siegelfunktion versiegelte Daten (TOS') gebildet werden, und

- die authentisierten Daten (TOS') werden zur Übertragung ausgegeben.

**Claims**

1. A process for transmitting data validated by at least one individual (KND), wherein the process comprises the following steps:

   - the data to be transmitted (TOR) are received and/or generated by an input device (BSW), wherein the input device (BSW) can be operated by the individual (KND),
   - the data are transmitted from the input device (BSW) to a data processing device (BTD) for processing the data (TOR) for authenticated data transmission,
   - for the purpose of authentication by the individual (KND), at least one biometric characteristic of the individual (KND) is detected by the data processing device (BTD), in order to determine at least a representation of the characteristic of the individual (KND) from this and to use it to generate feature information as a biometric sample (XBV),

   **characterised by** the following steps:

   - a reference data bit (AD2) stored in the data processing device (BTD) is retrieved from said unit, wherein the reference data bit (AD2) contains biometric reference information (RBV), which was linked to confidential information (CBV), wherein the biometric reference information (RBV) was derived from at least one biometric characteristic of the individual (KND) who is to validate the authenticated data transmission,
   - the data processing device (BTD) links the biometric sample (XBV) and the reference data bit (AD2) such that when the biometric reference information (RBV) corresponds to the biometric sample (XBV), the confidential information (CBV') is extracted from the reference data bit (AD2),
   - the extracted confidential information (CBV') undergoes an error correction (ECC), in order to correct deviations that are due to biometric characteristics being detected in different ways, resulting in deviations between the biometric sample and the biometric reference information,
   - the data being transmitted (TOR) and the corrected confidential information (SBV') are encoded by the data processing device (BTD) using a hash function and are linked to one another using a seal function, such that authenticated data (TOS') sealed in accordance with the seal function are created, and
   - the authenticated data (TOS') are released for transmission.

2. The process according to claim 1, wherein the released authenticated data (TOS') validated by the individual (KND) are transmitted to receiving means (OBS), wherein the receiving means (OBS) has available to it the confidential information encoded with the hash function (PI), wherein the receiving means (OBS) receives the non-authenticated data (TOR) via a parallel route (71), encodes the non-authenticated data (TOR) using the hash function and links it to the confidential information already encoded using the hash function (h(SBV)), so that comparative data are thereby obtained, and wherein the receiving means compares the comparative data with the authenticated data received (TOS') and checks whether the data correspond.

3. The process according to claim 1 or 2, wherein a transaction number (TAN) is generated by the data processing device (BTD) using the confidential information (SBV') and/or using at least part of the data being transmitted (TOR) and the transaction number (TAN) is released, in order to ensure transmission of the authenticated data (TOS').

4. The process according to claim 3, wherein the hash function is initially applied to the part of the data being transmitted (TOS') and/or to the confidential information (SBV') and the data being transmitted which is modified in this way is used to generate a transaction number (TAN).

5. The process according to one of the claims 1 - 4, wherein in order to generate the reference data bit (AD2) of the data processing device (BTD), the confidential information (SBV) undergoes an operation involving a reversal of the error correction according to claim 1, wherein the data processing device (BTD) generates biometric reference information based on at least one biometric characteristic of the individual (KND), who is later to validate data transmissions, and the biometric reference (RBV) and the confidential information (SBV) subjected to reverse error correction are linked, so that the reference data bit (AD2) is created and the reference data bit (AD2) is stored in a memory (23) in the data processing device (BTD).

6. An arrangement for the transmission of data which are validated by at least one individual (KND), wherein the arrangement comprises the following:

- a data processing device (BTD) for processing data for an authenticated data Transmission (TOS'),
- an input device (BSW), which is connected to the data processing device (BTD), wherein the input device (BTD) can be operated by the individual (KND), in order to receive and/or generate the data being transmitted (TOR),
- wherein the data processing device (BTD) has a detecting means for the purpose of authentication by the individual (KND), which is designed to detect at least one biometric characteristic of the individual (KND), in order to establish from this at least a representation of the characteristics of the individual (KND) and to generate feature information from this as a biometric sample (XBV) or as biometric reference information (RBV),

**characterised in that**

- the data processing device (BTD) has a data memory in which a reference data bit (AD2) is stored, wherein the reference data bit (AD2) displays biometric reference information (RBV), which was linked to confidential information (CBV), wherein the biometric reference information (RBV) was derived from at least one biometric characteristic of the individual (KND), who is to validate the authenticated data transmission, and wherein the data processing device (BTD) is designed to retrieve the reference data bit (AD2) from the data memory,
- the data processing device (BTD) has a connection device, which is designed to link the biometric sample (XBV) and reference data bit (AD2), such that when the biometric reference information corresponds to the biometric sample, the confidential information (CBV') is extracted from the reference data bit (AD2),
- the data processing device (BTD) has an error correcting device, which is designed to subject the extracted confidential information (CBV') to error correction (ECC), in order to correct deviations that are due to biometric characteristics being detected in different ways, resulting in deviations between the biometric sample (XBV) and the biometric reference information,
- the data processing device (BTD) is designed to receive the data being transmitted (TOR) from the input device (BSW), to encode the data being transmitted (TOR) and the corrected confidential information (CBV') using a hash function and to link them together using a seal function, such that authenticated data sealed in accordance with the seal function are created and the authenticated data (TOS') are released for transmission.

7. The arrangement according to claim 6, wherein the data processing device (BTD) is designed to subject the confidential information (SBV) to an operation, in order to generate the reference data bit (AD2), said operation involving a reversal of the error correction in accordance with claim 6, wherein the data processing device (BTD) is designed to generate a biometric reference (RBV) based on at least one biometric characteristic of the individual (KND) who is later to validate data transmissions, and to link together the biometric reference and the confidential information (CBV) which has undergone reverse error correction, so that the reference data bit (AD2) is created and the reference data bit is stored in a memory (23) in the data processing device (BTD).

8. A system exhibiting the arrangement according to claim 6 or 7 and receiving means (OBS), wherein the receiving means is connected to the input device (BSW) and the data processing device (BTD), wherein the receiving means has a data memory (51) in which the confidential information encoded with the hash function (PI) is stored, wherein the receiving means (OBS) is designed to receive the non-authenticated data via a parallel route (71), to encode the non-authenticated data (TOR) using the hash function and to link it to the confidential information already encoded using the hash function, so that comparative data is thereby obtained, and wherein the receiving means (OBS) is designed to compare the comparative data with the authenticated data (TOS') received and to check whether the data correspond.

9. A computer program designed to execute the process steps according to claim 1, when the computer program is loaded onto a main memory of the data processing device (BTD), wherein the computer program controls the data processing device as follows:

- for the purposes of authentication by the individual (KND) of the data processing device (BTD), at least one biometric characteristic of the individual (KND) is detected and at least one representation of the individual's characteristic is determined and feature information is in turn generated from this as a biometric sample (XBV),

**characterised by** the following steps:

- a reference data bit (AD2) stored in the data processing device (BTD) is retrieved from said unit, wherein the reference data bit contains biometric reference information (RBV), which was linked to confidential information (CBV), wherein the biometric reference information was derived from at least one biometric characteristic of the individual who is to validate the authenticated data transmission,
- the data processing device (BTD) links the biometric sample (XBV) and the reference data bit (AD2) such that when the biometric reference information corresponds to the biometric sample, the confidential information (CBV') is extracted from the reference data bit,
- the extracted confidential information (CBV') undergoes error correction, in order to correct deviations due to biometric characteristics being detected in different ways, resulting in deviations between the biometric sample (XBV) and biometric reference information (RBV),
- the data being transmitted (TOR) and the corrected confidential information (SBV') are encoded by the data processing device (BTD) using a hash function and linked to one another using a seal function, such that authenticated data (TOS') sealed in accordance with the seal function are created, and
- the authenticated data (TOS') are released for transmission.

## Revendications

1. Procédé servant à transférer des données confirmées par au moins une personne (KND), le procédé présentant les étapes suivantes :

- les données à transférer (TOR) sont reçues et/ou générées par un dispositif d'entrée (BSW), le dispositif d'entrée (BSW) pouvant être utilisé par la personne (KND),
- les données sont transmises du dispositif d'entrée (BSW) vers un système de traitement des données (BTD) en vue de la préparation des données (TOR) pour un transfert de données authentifié,
- aux fins d'une authentification par la personne (KND), le système de traitement des données (BTD) enregistre au moins une caractéristique biométrique de la personne (KND) afin d'en déterminer au moins une représentation de la caractéristique de la personne (KND) et d'en obtenir une information concernant la caractéristique comme échantillon biométrique (XBV),

**caractérisé par** les étapes suivantes :

- un système de traitement des données (BTD) appelle une date de référence (AD2) stockée dans ce dernier, la date de référence (AD2) présentant une information de référence (RBV) biométrique, qui est rattachée à une information confidentielle (CBV), l'information de référence (RBV) biométrique étant déduite d'au moins une caractéristique biométrique de la personne (KND), laquelle doit confirmer le transfert de données authentifié,
- le système de traitement des données (BTD) rattache l'échantillon biométrique (XBV) et la date de référence (AD2) de telle manière qu'en cas de concordance de l'information de référence (RBV) biométrique avec l'échantillon biométrique (XBV), l'information confidentielle (CBV') est extraite de la date de référence (AD2),
- l'information confidentielle extraite (CBV') est soumise à une correction d'erreur (ECC) afin de corriger des écarts dus à des caractéristiques biométriques enregistrées de différentes manières et des écarts en résultant entre l'échantillon biométrique et l'information de référence biométrique,

- les données à transmettre (TOR) et l'information confidentielle corrigée (SBV') sont codées par le système de traitement des données (BTD) en utilisant une fonction de hachage et sont rattachées entre elles en utilisant une fonction de scellement de sorte que des données authentifiées (TOS'), scellées selon la fonction de scellement sont formées, et
- les données authentifiées (TOS') sont délivrées en vue de leur transfert.

2. Procédé selon la revendication 1, dans lequel les données authentifiées (TOS') délivrées, confirmées par la personne (KND) sont transférées à un système de réception (OBS), sachant que le système de réception (OBS) dispose de l'information confidentielle (PI) codée avec la fonction de hachage, sachant que le système de réception (OBS) reçoit les données non authentifiées (TOR) par l'intermédiaire d'une voie parallèle (71), code les données non authentifiées (TOR) en utilisant la fonction de hachage, et les rattache à l'information confidentielle déjà codée en utilisant la fonction de hachage (h(SBV)), afin d'obtenir ainsi des données de comparaison, et sachant que le système de réception compare les données de comparaison aux données authentifiées (TOS') reçues et vérifie si lesdites données coïncident.

3. Procédé selon la revendication 1 ou 2, dans lequel le système de traitement des données (BTD) génère en utilisant l'information confidentielle (SBV') et/ou en utilisant au moins une partie des données à transférer (TOR), un numéro de transaction (TAN), et sachant que le numéro de transaction (TAN) est délivré pour sécuriser un transfert des données authentifiées (TOS').

4. Procédé selon la revendication 3, dans lequel en premier lieu la fonction de hachage est appliquée à la partie des données à transférer (TOS') et/ou à l'information confidentielle (SBV') et sachant que les données à transférer ainsi modifiées sont utilisées pour générer un numéro de transaction (TAN).

5. Procédé selon l'une quelconque des revendications 1-4, dans lequel pour générer la date de référence (AD2) par le système de traitement des donnée (BTD), l'information confidentielle (SBV) est soumise à une opération qui correspond à la correction inversée d'erreur selon la revendication 1, sachant que le système de traitement des données (BTD) génère sur la base d'au moins une caractéristique biométrique de la personne (KND), qui doit confirmer ultérieurement les transferts de données, une information de référence biométrique, et rattache entre elles la référence (RBV) biométrique et l'information confidentielle (SBV) soumise à la correction inversée d'erreur de sorte que la date de référence (AD2) est formée, et que la date de référence (AD2) est stockée dans une unité de stockage (23) du système de traitement des données (BTD).

6. Ensemble servant à transférer des données, confirmées par au moins une personne (KND), sachant que l'ensemble présente les éléments suivants :

- un système de traitement des données (BTD) servant à préparer les données pour un transfert des données authentifiées (TOS'),
- un dispositif d'entrée (BSW), relié au système de traitement des données (BTD), sachant que le dispositif d'entrée (BTD) peut être utilisé par la personne (KND) afin de recevoir et/ou de générer les données à transférer (TOR),
- sachant que le système de traitement des données (BTD) présente aux fins d'une authentification par la personne (KND) un système d'enregistrement, qui est configuré pour enregistrer au moins une caractéristique biométrique de la personne (KND) afin d'en déterminer au moins une représentation de la caractéristique de la personne (KND) et de générer à partir de là une information caractéristique comme échantillon biométrique (XBV) ou comme information de référence (RBV) biométrique,

**caractérisé en ce que**

- le système de traitement des données (BTD) présente une unité de stockage de données, dans laquelle est stockée une date de référence (AD2), sachant que la date de référence (AD2) présente une information de référence (RBV) biométrique, qui est rattachée à une information confidentielle (CBV), sachant que l'information de référence (RBV) biométrique est déduite d'au moins une caractéristique biométrique de la personne (KND), laquelle doit confirmer le transfert authentifié des données, et sachant que le système de traitement des données (BTD) est configuré pour appeler la date de référence (AD2) de l'unité de stockage de données,
- le système de traitement des données (BTD) présente un système de rattachement, qui est configuré pour rattacher l'échantillon biométrique (XBV) et la date de référence (AD2) de telle manière qu'en cas de concordance de l'information de référence biométrique avec l'échantillon biométrique, l'information confidentielle (CBV') est extraite de la date de référence (AD2),

- le système de traitement des données (BTD) présente un système de correction d'erreur, qui est configuré pour soumettre l'information confidentielle (CBV') extraite à une correction d'erreur (ECC), afin de corriger des écarts dus aux caractéristiques biométriques enregistrées de différentes manières et des écarts en résultant entre l'échantillon biométrique (XBV) et l'information de référence biométrique,
- le système de traitement des données (BTD) est configuré pour recevoir les données à transférer (TOR) du dispositif d'entrée (BSW), pour coder en utilisant une fonction de hachage les données à transférer (TOR) et l'information confidentielle (CBV') corrigée et pour les rattacher entre elles en utilisant une fonction de scellement, de sorte que des données authentifiées, scellées selon la fonction de scellement sont formées, et enfin pour délivrer les données authentifiées (TOS') en vue de leur transfert.

7. Ensemble selon la revendication 6, dans lequel le système de traitement des données (BTD) est configuré pour soumettre afin de générer la date de référence (AD2), l'information confidentielle (SBV) à une opération qui correspond à la correction d'erreur inversée selon la revendication 6, sachant que le système de traitement des données (BTD) est configuré pour générer sur la base d'au moins une caractéristique biométrique de la personne (KND), qui doit confirmer ultérieurement des transferts de données, une référence biométrique (RBV) et pour rattacher entre elles la référence biométrique et l'information confidentielle (CBV) soumise à la correction d'erreur inversée, de sorte que la date de référence (AD2) est formée, et que la date de référence est stockée dans l'unité de stockage (23) du système de traitement des données (BTD).

8. Système, présentant l'ensemble selon la revendication 6 ou 7 et un système de réception (OBS), dans lequel le système de réception est relié au dispositif d'entrée (BSW) et au système de traitement des données (BTD), sachant que le système de réception présente une unité de stockage des données (51), dans laquelle est stockée l'information confidentielle (PI) codée avec la fonction de hachage, sachant que le système de réception (OBS) est configuré pour recevoir les données non authentifiées par l'intermédiaire d'une voie parallèle (71), pour coder en utilisant la fonction de hachage les données non authentifiées (TOR) et pour rattacher des dernières à l'information confidentielle déjà codée en utilisant la fonction de hachage afin d'obtenir ainsi des données de comparaison, et sachant que le système de réception (OBS) est configuré pour comparer les données de comparaison aux données authentifiées (TOS') reçues et pour vérifier si lesdites données coïncident.

9. Programme informatique, configuré pour exécuter les étapes de procédé selon la revendication 1, si le programme informatique est chargé dans une unité de stockage de travail du système de traitement des données (BTD), sachant que le programme informatique commande le système de traitement des données comme décrit ci-après :

- aux fins d'une authentification par la personne (KND), le système de traitement des données (BTD) enregistre au moins une caractéristique biométrique de la personne (KND) dont on détermine au moins une représentation de la caractéristique de la personne afin d'en générer à nouveau une information caractéristique comme échantillon biométrique (XBV),

**caractérisé par** les étapes suivantes :

- une date de référence (AD2) stockée dans le système de traitement des données (BTD) est appellée par ce dernier, sachant que la date de référence présente une information de référence (RBV) biométrique qui est rattachée à une information confidentielle (CBV), sachant que l'information de référence biométrique est déduite d'au moins une caractéristique biométrique de la personne, qui doit confirmer le transfert de données authentifié,
- le système de traitement des données (BTD) rattache l'échantillon biométrique (XBV) et la date de référence (AD2) de telle manière qu'en cas de concordance de l'information de référence biométrique et de l'échantillon biométrique, l'information confidentielle (CBV') est extraite de la date de référence,
- l'information confidentielle extraite (CBV') est soumise à une correction d'erreur afin de corriger des écarts dus aux caractéristiques biométriques enregistrées de différentes manières et des écarts en résultant entre l'échantillon biométrique (XBV) et l'information de référence (RBV) biométrique,
- les données à transférer (TOR) et l'information confidentielle corrigée (SBV') sont codées par le système de traitement des données (BTD) en utilisant une fonction de hachage et sont rattachées entre elles en utilisant une fonction de scellement de telle sorte que des données authentifiées (TOS'), scellées selon la fonction de scellement sont formées, et
- les données authentifiées (TOS') sont délivrées aux fins de leur transfert.

Fig.1

Fig. 2

Fig. 3

|       | 1 | 2 | 3 | 4 | 5 |     | N-1 | N |
|-------|---|---|---|---|---|-----|-----|---|
| RBV   | 0 | 1 | 1 | 0 | 1 | ... | 0 | 1 |

XOR

|       | 1 | 2 | 3 | 4 | 5 |     | N-1 | N |
|-------|---|---|---|---|---|-----|-----|---|
| CBV   | 0 | 1 | 0 | 1 | 1 | ... | 0 | 1 |

=

|       | 1 | 2 | 3 | 4 | 5 |     | N-1 | N |
|-------|---|---|---|---|---|-----|-----|---|
| AD2   | 0 | 0 | 1 | 1 | 0 | ... | 0 | 0 |

Fig. 4

|       | 1 | 2 | 3 | 4 | 5 |     | N-1 | N |
|-------|---|---|---|---|---|-----|-----|---|
| AD2   | 0 | 0 | 1 | 1 | 0 | ... | 0 | 0 |

XOR

|       | 1 | 2 | 3 | 4 | 5 |     | N-1 | N |
|-------|---|---|---|---|---|-----|-----|---|
| XBV   | 0 | 1 | 0 | 0 | 1 | ... | 0 | 1 |

=

|       | 1 | 2 | 3 | 4 | 5 |     | N-1 | N |
|-------|---|---|---|---|---|-----|-----|---|
| CBV'  | 0 | 1 | 1 | 1 | 1 | ... | 0 | 1 |

Fig. 5

|   | 1 | 2 | 3 | 4 | 5 | 6 |
|---|---|---|---|---|---|---|
| CBV | 1 | 0 | 1 | 1 | 1 | 0 |
| + | | | | | | |
| f | 0 | 0 | 1 | 0 | 0 | 0 |
| = | | | | | | |
| CBV' | 1 | 0 | 0 | 1 | 1 | 0 |

Fig. 6

| | | | | | | | |
|---|---|---|---|---|---|---|---|
| 000000 | 110100 | 011010 | 101001 | 101110 | 110011 | 011101 | 000111 |
| 000001 | 110101 | 011011 | 101000 | 101111 | 110010 | 011100 | 000110 |
| 000010 | 110110 | 011000 | 101011 | 101100 | 110001 | 011111 | 000101 |
| 000100 | 110000 | 011110 | 101101 | 101010 | 110111 | 011001 | 000011 |
| 001000 | 111100 | 010010 | 100001 | 100110 | 111011 | 010101 | 001111 |
| 010000 | 100100 | 001010 | 111001 | 111110 | 100011 | 001101 | 010111 |
| 100000 | 010100 | 111010 | 001001 | 001110 | 010011 | 111101 | 100111 |

**Figur 7**

EP 2 368 207 B1

$$p_{0,0} \quad p_{0,1} \quad p_{0,2} \qquad 1 \quad 0 \quad 0$$

$$p_{1,0} \quad p_{1,1} \quad p_{1,2} \qquad 0 \quad 1 \quad 0$$

$$p_{2,0} \quad p_{2,1} \quad p_{2,2} \qquad 0 \quad 0 \quad 1$$

Fig. 8

Fig. 9

CBV' $\boxed{1}\ \boxed{0}\ \boxed{0}\ \boxed{1}\ \boxed{1}\ \boxed{0}$

$$\underline{M}$$

f $\boxed{0}\ \boxed{0}\ \boxed{1}\ \boxed{0}\ \boxed{0}\ \boxed{0}$

|   | 1 | 2 | 3 | 4 | 5 | 6 |
|---|---|---|---|---|---|---|
| CBV' | 1 | 0 | 0 | 1 | 1 | 0 |

-

|   | 1 | 2 | 3 | 4 | 5 | 6 |
|---|---|---|---|---|---|---|
| f | 0 | 0 | 1 | 0 | 0 | 0 |

=

|   | 1 | 2 | 3 | 4 | 5 | 6 |
|---|---|---|---|---|---|---|
| CBV | 1 | 0 | 1 | 1 | 1 | 0 |

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02078249 A1
- WO 0205077 A2
- US 4993068 A
- WO 2004019188 A2